(19) Europäisches Patentamt
European Patent Office
Office européen des brevets

(11) **EP 0 619 904 B1**

(12) **EUROPEAN PATENT SPECIFICATION**

(45) Date of publication and mention
of the grant of the patent:
**01.03.2000 Bulletin 2000/09**

(51) Int. Cl.$^7$: **G06F 17/50**

(21) Application number: **93902683.7**

(86) International application number:
**PCT/US92/11087**

(22) Date of filing: **17.12.1992**

(87) International publication number:
**WO 93/12500 (24.06.1993 Gazette 1993/15)**

(54) **METHOD USING RELATIONAL ENTITIES FOR OBJECT-ORIENTED COMPUTER-AIDED GEOMETRIC DESIGN**

AUF RELATIONALEN GRÖSSEN BASIERENDES VERFAHREN FÜR DEN OBJEKTORIENTIERTEN RECHNERUNTERSTÜTZTEN GEOMETRISCHEN ENTWURF.

PROCEDURE UTILISANT D'ENTITES RELATIONNELLES POUR CONCEPTION GEOMETRIQUE D'OBJETS ASSISTEE PAR ORDINATEUR

(84) Designated Contracting States:
**DE FR GB**

(30) Priority: **19.12.1991 US 810960**

(43) Date of publication of application:
**19.10.1994 Bulletin 1994/42**

(73) Proprietor: **AEROHYDRO, INC.**
**Southwest Harbor, ME 04679 (US)**

(72) Inventor: **LETCHER, John S., Jr.**
**Southwest Harbor, ME 04679 (US)**

(74) Representative:
**Rackham, Anthony Charles et al**
**Lloyd Wise, Tregear & Co.,**
**Commonwealth House,**
**1-19 New Oxford Street**
**London WC1A 1LW (GB)**

(56) References cited:
**US-A- 4 829 446**

• **WOLF W: "OBJECT-ORIENTED PROGRAMMING FOR CAD" IEEE DESIGN & TEST OF COMPUTERS, vol. 8, no. 1, 1 March 1991, pages 35-42, XP000202259**
• **GEOMETRIC MODELING, 1985, MORTENSON, "Computer-Aided Design and Manufacturing", pp. 552-571.**

**Description**

FIELD OF THE INVENTION

The invention relates to a method of representing two- and three-dimensional geometric objects in a data structure. The method is particularly useful in the field of computer-aided design and numerical-control manufacturing of complex geometric objects made up of curves, surfaces, and solids.

BACKGROUND OF THE INVENTION

Geometric definition is an essential element in the design of practically any object to be manufactured. Until recently, geometric definition was performed primarily by drafting scale drawings of the object. In the last two decades, computer-aided geometric design (CAGD) has largely supplanted drafting. In CAGD, mathematical representations of an object's geometry are stored in computer memory and manipulated by the computer user. Sometimes the product of a CAGD design is scale drawings produced on a plotting device; in other cases a CAGD representation of the object is transmitted to numerical-control (NC) machinery for automated production of the object. The CAGD representation may also serve as a basis for analysis and evaluation of the design aside from visual aspects, e.g. finite-element stress analysis.

One well-known example of a CAGD program is AutoCAD (R), produced by AutoDesk, Inc. of Sausalito, Calif. Initially a two-dimensional environment simulating the drafting process on paper, AutoCAD now provides a three-dimensional environment in which many types of geometric entities including points, lines, curves, surfaces and solids can be defined, positioned, and edited to build up extremely precise definitions of highly complex objects. There are other CAGD programs which are much less general than AutoCAD, but are better adapted to specialized purposes; e.g. FAIRLINE (R) by AeroHydro, Inc., which is adapted to the special task of creating fair surfaces for ship hull design. CAGD programs for workstation and mainframe computers, for example IGDS (R) by Intergraph Corp., Huntsville, Ala., provide more flexible surface and solid modeling entities, such as nonuniform rational B-spline (NURBS) surfaces.

In a CAGD program, each object springs into existence at the time when it is created, either by execution of a user command, or as a result of reading data from a file. In most circumstances the new object is positioned, oriented or constructed in some deliberate relationship to one or more objects already in existence. For example, line B may be created in such a way that one of its endpoints is one end of a previously existing line A. However, the relationship which was clearly in the mind of the user at the time line B was created is not retained by the CAGD program; so if in some later revision of the geometry line A is displaced, then line B will stay where it is and no longer join line A. A conventional CAGD representation of geometry therefore consists of a large number of essentially independent simple objects, whose relationships are incidental to the manner and order in which they were created, but are not known to the program.

If design always proceeded in a forward direction, the loss of relationship information would not be a problem. One would start a project, add objects until the design is complete, and save the results. However, it is well known that engineering design is only rarely a simple forward process. It is far more commonly an iterative process: design is carried forward to some stage, then analyzed and evaluated; problems are identified; then the designer has to back up to some earlier stage and work forward again. It is typical that many iterative cycles are required, depending on the skills of the designer, the difficulty of the design specifications, and any optimization objectives that may be present. In each forward stage, the designer will have to repeat many operations he previously performed (updating), in order to restore relationships that were disrupted by the revision of other design elements. For example, he may have to move the end of line B so it once more joins line A; he may have to do this many times in the course of the design. CAGD systems typically provide extensive editing functions to facilitate these updates.

Revision of a previously existing design to meet new requirements is a common situation where similar problems are encountered. A change that alters an early stage of the design process requires at least one forward pass through all the subsequent design stages to restore disrupted relationships. Particularly if the relationships, and the sequence of design stages to achieve them, have been lost (and they are not normally retained in a way accessible to the user), the updating process can be very difficult, error-prone and time-consuming.

Some partial solutions to this problem are known. In some CAGD programs including AutoCAD, lines A and B can be created together as part of a "polyline" entity; then their connectivity will be automatically maintained if any of their endpoints, including their common point, are moved. Christensen (US 4,663,616) has disclosed the concept of a "sticky" attribute which causes selected lines to remain connected to objects they are deliberately attached to. Draney (US 4,829,446) has disclosed the concept of giving points in two dimensions serial numbers, and locating another point in two dimensions (a "Relative Point") by its relationship (x,y coordinate offsets) to a numbered point. Oosterholt (US 4,868,766) has disclosed the concept of giving all geometric objects names, and locating each object in relationship to at most one other object, in a tree structure of dependency. Ota et al. (US 5,003,498) have disclosed a CAGD system in which some objects have names, and are used by name in the construction of other more complex objects. Saxton (US 4,912,657) discloses a system of "modular parametric design" in which design elements can be stored and conveniently recreated with different leading dimensions.

As mentioned above, many CAGD surface modeling systems support only a single type of surface, e.g. the. FAIRLINE (R) surface, which is created from explicit cubic splines lofted through a set of B-spline "Master Curves". Although this surface can be molded into a wide variety of shapes useful in its own domain of ship hull design, there are many shapes it cannot make; e.g. it cannot form either an exact circular cross section or a completely round nose, both common features of submarine hulls. CAGD programs suited to mechanical design, such as AutoCAD, frequently support several simple surface types such as ruled surfaces and surfaces of revolution, but do not support more complex free-form surfaces such as B-spline parametric surfaces. Although it is widely appreciated that there would be large advantages in supporting a broader set of curve and surface types within a single CAGD environment, this has heretofore been possible only in workstation and mainframe CAGD systems, presumably because of the complexity of the programming required.

One known partial solution to this problem is to support only a single surface type, which has sufficient degrees of flexibility to encompass a useful set of simpler surfaces as special cases. Nonuniform rational B-spline (NURBS) surfaces have been proposed to fill this role, since by special choice of knots and coefficients the NURBS curve can accurately represent arcs of circles, ellipses, and other useful conic section curves. Disadvantages of this approach include the obscure relationship between the selection of knots and coefficients to achieve a desired curve; the large quantity of data required to define even a simple surface such as a circular cylinder; nonuniformity of resulting parameterizations; and the general unsuitability of NURBS surfaces for interactive design of surfaces having special requirements such as fairness or developability.

In CAGD surface modeling systems, intersections between surfaces often account for much of the complexity in both the program and the user interface. In a typical application, surface Y is constructed, then surface Z is constructed in such a way that it intersects surface Y. The next step is often to find the curve of intersection of Y and Z; then portions of Y and/or Z which extend beyond that curve may be discarded (trimmed). The problem of intersection of two surfaces is inherently difficult, for several reasons. The two surfaces may not intersect at all. Finding any single point of intersection requires solution of three simultaneous, usually nonlinear, equations. These equations will be ill-conditioned if the intersection is at a low angle. The intersection may be a single point, a simple arc, a closed curve, a self-intersecting curve, or multiple combinations of these elements. The surfaces might actually coincide over some finite area. Once a curve of intersection is found, it is often difficult to indicate correctly which portion of which surface is to be discarded. After trimming, a parametric surface patch may no longer be topologically quadrilateral, so it can no longer be conveniently parameterized.

OBJECTS OF THE INVENTION

It is an object of the present invention to provide a CAGD environment which minimizes the effort required to revise and update geometric models, by capturing, storing and utilizing essential dependencies between the model's geometric objects. A second object of the invention is to provide a CAGD surface modeling environment in which a wide variety of curve and surface types are supported for convenience and flexibility. A third object of the invention is to provide a CAGD surface modeling environment in which the difficulties of intersecting and trimming surfaces are largely avoided by providing convenient ways to construct surfaces which contact and join one another accurately in the first place, with contacts and joins that are automatically maintained during updates of the model.

SUMMARY OF THE INVENTION

The method according to the invention is set out in claim 1.
In this summary, a three-dimensional design space is contemplated, utilizing Cartesian coordinates (x, y, z) for the location of points. Some principles of the invention could also be advantageously applied in a design space of two dimensions, or of more than three dimensions, or with non-Cartesian coordinates.

Definition: An entity is a type of geometric object defined within the system, and requiring a specific set of data for its actualization. Common CAGD entities are the point, the line, the arc, the Bezier patch.

Definition: An object is an actualization of an entity; for example, a point located at (1., 2., 3.).

Definition: A logical model is any valid collection of objects, i.e., a set of valid objects in which all dependencies are satisfied.

Definition: An <u>absolute model</u> is a geometric representation computed from a logical model, in which all points are located by their absolute coordinates.

The first objective just mentioned (utilizing dependencies) is achieved by associating with each object in the model a unique name (or number), and defining and implementing a series of entity types whose actualizations depend on, by referencing the names (or numbers) of, other objects in the model. According to the invention, the dependency relationship between objects can have the logical form of a directed graph (digraph). This data structure is known to the program, is available to be manipulated by the user, is stored along with specific numerical data to form the complete internal representation of the model, and is used to selectively update the model following alteration of any component object. Those qualitative properties of the model which are automatically maintained by utilizing the data structure of dependencies are referred to below as "durable" properties.

Each node of the dependency digraph represents an object; each directed edge indicates the dependency of one object on another. The dependency can take many forms. For example, a Relative Point depends on another point object for its location. A B-spline Curve depends on each of the point objects which are its vertices. A Lofted Surface depends on each of the curve objects through which it is lofted, and it also depends, in turn, on each point object used in the definition of those curves. Dependency can extend to many levels. An object can depend on many other objects, and can have many other objects dependent on it.

Some objects may be defined in an absolute sense, having no dependency on any others. For example, an Absolute Point is specified solely by its coordinates x, y, z.

It is useful to classify and define entities first in terms of their dimensionality, and second in terms of their primary dependencies:

Points are zero-dimensional objects.

An Absolute Point depends on nothing.
A Relative Point depends on another point.
A Bead is a point constrained to lie on a curve.
A Magnet is a point constrained to lie on a surface.
A Ring is a point constrained to lie on a snake.

Curves are one-dimensional objects.

A Line depends on two points.
An Arc depends on three points.
A B-spline Curve depends on two or more points.
A C-spline Curve depends on two or more points.

Surfaces are two-dimensional objects.

A Translation Surface depends on two curves.
A Ruled Surface depends on two curves.
A Revolution Surface depends on one curve and two points.
A C-Lofted Surface depends on two or more curves.
A Blended Surface depends on three or more curves.
A B-spline Surface depends on an array of points.

Snakes are one-dimensional objects, parametric curves constrained to lie on a parametric surface. Any snake depends on its surface.

A Line Snake depends on two magnets or rings.
A Geodesic Snake depends on two magnets or rings.
An Arc Snake depends on three magnets or rings.
A B-Spline Snake depends on two or more magnets or rings.
A C-Spline Snake depends on two or more magnets or rings.

The above list of entities is intended to be illustrative, but not necessarily complete. Extension of this system of entities in a now obvious way to include parametric solids (three-dimensional objects with parameters u, v, w), and point, curve and surface entities located relative to a solid by use of the solid's parametric coordinate system, is specifically contemplated.

A different useful classification may be made in terms of the dependency role each entity class can fulfill:

When a point called for, any point entity may be used.
When a bead is called for, only a bead may be used.
When a magnet is called for, a magnet or ring may be used.
When a ring is called for, only a ring may be used.
When a curve is called for, any point, curve or snake entity may be used.
When a snake is called for, a snake, magnet or ring may be used.
When a surface is called for, only a surface may be used.

Use is made of parametric coordinates as part of the data for some of these entities. For example, a curve may be parameterized with a parameter t which varies from 0 at one end to 1 at the other. An Absolute Bead can then be located by specifying the curve and a specific value for t. A surface may be parameterized with parameters u,v each of which varies independently from 0 to 1. An Absolute Magnet can then be located by specifying the surface and a specific pair of parameter values for u,v. A snake is a parametric curve in the two-dimensional u,v parameter space of its supporting surface.

One useful form of representation of a logical model is a text description having one record for each object. The object record includes the entity type, the object name, various object attributes such as color and visibility, and any variable data required to actualize the object, presented in a predefined order peculiar to the entity. For example, the following set of five records is the solution to the "line A - line B" problem discussed above, according to the invention:

```
AbsPoint A1 14 1 1. 1. 3.;
AbsPoint A2 14 1 2. 1. 3.;
Line line_A 13 1 A1 A2;
AbsPoint B2 14 1 2. 3. 3.;
Line line_B 13 1 A2 B2;
```

This model contains 5 objects: 3 Absolute Points (named 'A1', 'A2', 'B2') and 2 Lines (named 'line_A', 'line_B'). The numbers 14 and 13 are color specifiers, and the 1's that follow them specify visibility. This data clearly records the intention that 'line_B' start where 'line_A' ends, viz. at point 'A2'. The dependency of 'line_B' on point 'A2' creates the durable connection.

The following record adds one more object to this example:

```
AbsBead bead_B 12 1 line_B 0.7;
```

This creates a visible point, of color 12, constrained to remain on 'line_B' at a parameter value of 0.7, i.e., 70% of the way from point 'A2' to point 'B2'. Following any change in 'line_A', 'bead_B' will still lie on 'line_B', in the same relative location. The dependency of 'bead_B' on 'line_B' creates the durable relationship.

For purposes of output or display, an absolute model will be computed from the logical model. For this example, the absolute model would consist of:

```
a point, color 14 at (1., 1., 3.)
a point, color 14, at (2., 1., 3.)
a line, color 13, from (1., 1., 3.) to (2., 1., 3.)
a point, color 14, at (2., 3., 3.)
a line, color 13, from (2., 1., 3.) to (2., 3., 3.)
a point, color 12, at (2., 2.4, 3.)
```

Now suppose that the example model is changed by moving point 'A2' to a new position (2., 1., 4.). This is accomplished by changing one element in one record of the logical model:

```
AbsPoint A2 14 1 2. 1. 4.;
```

Following this change, the updated absolute model would consist of:

```
a point, color 14 at (1., 1., 3.)
a point, color 14, at (2., 1., 4.)
```

a line, color 13, from (1., 1., 3.) to (2., 1., 4.)

a point, color 14, at (2., 3., 3.)

a line, color 13, from (2., 1., 4.) to (2., 1., 3.)

a point, color 12, at (2., 2.4, 3.3)

The connection of 'line_A' and 'line_B' has been automatically maintained; 'bead_B' is still located on 'line_B, and in the same relative position, i.e. at 70% of the length of 'line_B'. This brief example illustrates the automatic updating of the model that is made possible by utilization of the digraph data structure of dependencies.

The internal or external representation of the data structure may well be different from this text representation, but will nevertheless encode the dependency information in a manner that is logically equivalent to a digraph.

The second objective (supporting a variety of curve and surface types) is achieved by a special organization of the program instructions. According to the invention, all point objects may be accessed through a single routine Point, whose input parameter is the name or index of a point object, and which returns the x, y, z coordinates of the object. Within Point, a case statement branches to separate routines for evaluating each specific point entity. It is essential that Point be programmed in a recursive fashion, so that it can call itself, or be called by routines that have been called by it.

Similarly, all curve objects may be accessed through a single routine Curve whose arguments are the name or index of a particular curve, and a list of t parameter values, and whose return parameters include a tabulation of x, y, z coordinates. Within Curve, a case statement branches to separate routines for evaluating each specific curve entity. It is likewise essential that Curve be programmed in a recursive fashion, since the data for any curve may depend on another curve. To the program module that calls Curve, all types of curves are interchangeable; you give it a t, it gives you back a point x, y, z. To support a new curve entity, it is only necessary to define the data required for that entity; add one case to the Curve routine; and add one routine that evaluates the new entity.

In like fashion, there can be a single recursive routine Snake whose arguments are the name or index of a particular snake object, and a list of t parameter values, and whose return parameters include a tabulation of x, y, z coordinates. If snakes are treated as curves in the two-dimensional u, v parameter space of a surface, then addition of a new curve entity automatically adds a new snake entity of the same type. Maintaining this correspondence of curve and snake types is advantageous since the user then need not learn and remember separate properties for curves and snakes.

In like fashion, there can be a single recursive routine Surface whose arguments are the name or index of a particular surface object, and vectors of u and v parameter values, and whose return parameters include a tabulation of x, y, z coordinates. To support N surface types, the programming effort is only proportional to N, rather than N squared.

The third objective (avoidance of surface-surface intersection and trimming) is achieved by utilizing the dependency relationships disclosed above, and providing certain generally useful snake and surface entities. Two distinct problems are addressed here: (1) forcing two surface objects Y and Z to accurately share a common edge, and (2) forcing one surface object Z to end accurately on another surface object Y, along a curve which is not necessarily an edge of Y.

According to the invention, durable common edges between surfaces may be achieved by using common data to define the adjoining edges. For example, if the two surfaces are blended surfaces, whose data includes boundary curves, all that is required is to use the same curve object for the corresponding edges of the two surfaces. Two lofted surfaces will accurately join in the loft direction if their corresponding Master Curves have common endpoints along the edges where they adjoin. The SubCurve entity, which creates a new curve identical to the portion of a specified existing curve between two specified beads, allows construction of common edges even where commonality does not extend along a complete edge of one or both surfaces.

According to the invention, a surface Z having an edge which accurately and durably lies on another surface Y can be achieved by defining a snake S on Y, then using S for an edge curve in the subsequent specification of Z. This arrangement also provides an alternative solution for common edges, when S is specified to be a Line Snake lying along part or all of one edge of Y.

## BRIEF DESCRIPTION OF THE DRAWINGS

FIG. 1 shows a computer system having a central processing unit and disk memory, keyboard, mouse, and monitor, on which is displayed a 3-dimensional geometric model as a wireframe.

FIGS. 2 to 5 illustrate point objects: FIG. 2, Absolute Point and Relative Point; FIG. 3, Absolute Bead and Relative Bead; FIG. 4, Absolute Magnet and Relative Magnet; FIG. 5, Absolute Ring and Relative Ring.

FIGS. 6 to 10 illustrate curve objects: FIG. 6, Line and Arc curves; FIG. 7, B-Spline Curve; FIG. 8, C-Spline Curve; FIG. 9, Sub-curve; FIG. 10, Relative Curve.

FIGS. 11 to 18 illustrate surface objects: FIG. 11, Ruled Surface; FIG. 12, Translation Surface; FIG. 13, Revolution Surface; FIG. 14, Blended Surface; FIG. 15, C-Lofted Surface; FIG. 16, B-spline Surface; FIG. 17, Sub-surface; FIG. 18, Relative Surface.

FIGS. 19 to 24 illustrate snake objects: FIG. 19, Line Snake; FIG. 20, Arc Snake; FIG. 21, B-spline Snake; FIG. 22, C-spline Snake; FIG. 23, Sub-snake; FIG. 24, Relative Snake.

FIG. 25 is an example of the dependency digraph for a simple model.

FIG. 26 illustrates a possible organization of program modules which accomplishes the purposes of the invention.

FIG. 27 shows an example application.

DETAILED DESCRIPTION OF THE PREFERRED EMBODIMENT

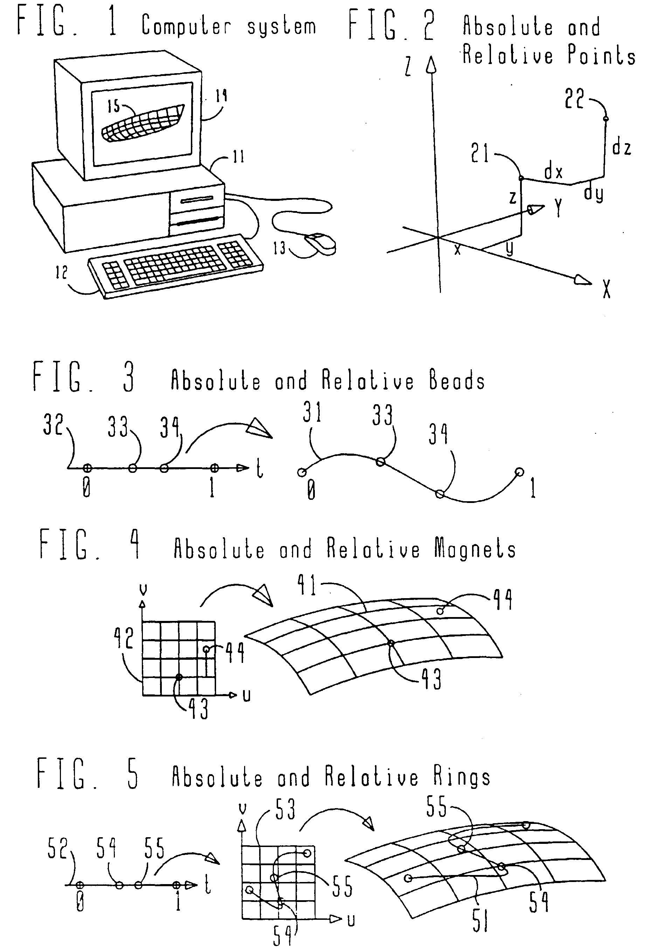

One preferred embodiment of the invention is a computer program operating on a suitable computer system such as an IBM-PC compatible or engineering workstation with a high-resolution color graphics display. The input device can be either a keyboard or a mouse. The graphics display is used primarily to display wireframe images of the model in perspective and/or orthogonal views. Controls are provided so the user can freely rotate, zoom or pan to select appropriate views. Alternative screen windows can show the u, v parameter space of a surface; outline-form listings of objects and their dependencies; and the text form of the logical model. FIG. 1 shows a computer system having a central processing unit and disk memory 11, keyboard 12, mouse 13, and monitor 14, on which is displayed a 3-dimensional object as a wireframe 15.

In the graphics display, a visible point object is displayed as a small circle. A visible line, curve, or snake object is represented as a polyline with a user-selectable number of subdivisions. A visible surface object is displayed as a mesh of parameter lines having a user-selectable number of subdivisions in each parameter direction. With more advanced graphic display hardware, surface objects may be rendered as solids with hidden lines and surfaces removed.

All objects have a color attribute; this can select one color from a palette of 16. All objects have a visibility attribute; this is a 16-bit integer in which the bits have different significance for different classes of entities, as follows:

points:

   bit 1: point is visible

curves, snakes:

   bit 1: polyline is visible
   bit 2: polygon is visible
   bit 3: tick-marks displayed at uniform parameter intervals

surfaces:

   bit 1: parameter lines in u-direction are visible
   bit 2: parameter lines in v-direction are visible
   bit 4: boundary is visible

The following is a list of entities supported in the preferred embodiment:

Point class:

Absolute Point (AbsPoint): x, y, z

   x, y, z are the absolute coordinates of the point.

<u>Relative Point</u> (RelPoint): point, dx, dy, dz

dx, dy, dz are the coordinate offsets from 'point'
FIG. 2 shows an Absolute Point 21 and a Relative Point 22 located in a Cartesian coordinate system.

<u>Absolute Bead</u> (AbsBead): curve, t

t is an absolute parameter value on 'curve'

<u>Relative Bead</u> (RelBead): bead, dt

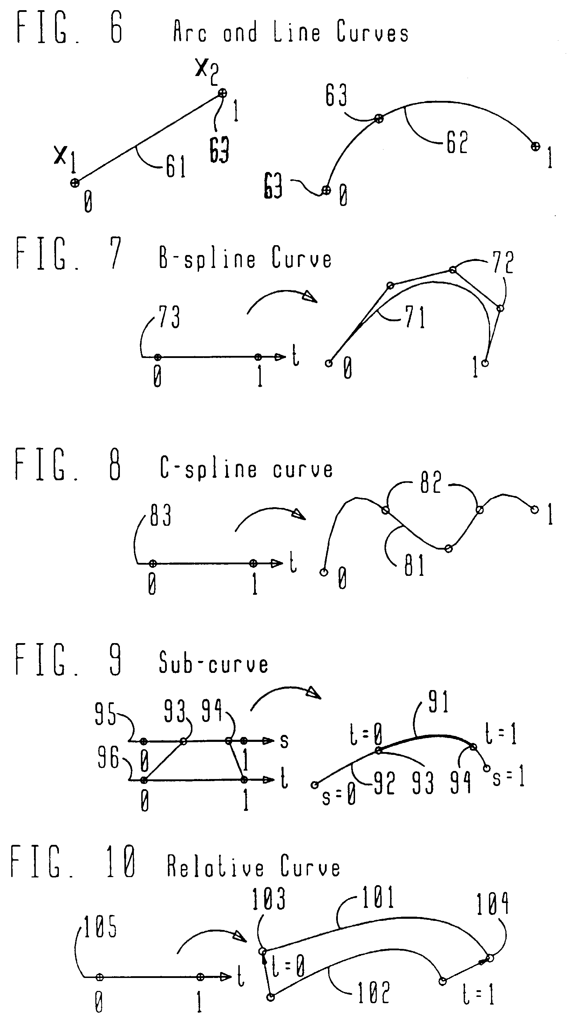

dt is the parameter offset from 'bead'
FIG. 3 shows a curve 31 in 3-space mapped from a 1-D parameter space 32, an Absolute Bead 33, and a Relative Bead 34 located in both spaces.

<u>Absolute Magnet</u> (AbsMagnet): surface, u, v

u, v are the absolute parameters on 'surface'

<u>Relative Magnet</u> (RelMagnet): magnet, u, v

du, dv are the parameter offsets from 'magnet'
FIG. 4 shows a surface 41 in 3-space mapped from a 2-D parameter space 42, an Absolute Magnet 43, and a Relative Magnet 44 located in both spaces.

<u>Absolute Ring</u> (AbsRing): snake, t

t is an absolute parameter value on 'snake'

<u>Relative Ring</u> (RelRing): ring, dt

dt is a parameter offset from 'ring'
FIG. 5 shows a snake 51 in 3-space mapped from a 1-D parameter space 52 through a 2-D parameter space 53, and an Absolute Ring 54 and a Relative Ring 55 located in all three spaces.

<u>Curve class</u>:
(All curves are parameterized from 0. to 1.)

<u>Line</u> (Line): point1, point2
The Line is a straight line from 'point1' ($\mathbf{x}_1$) to 'point2' ($x_2$):

$$x(t) = (1-t) \, x_1 + t \, x_2$$

<u>Arc</u> (Arc): point1, point2, point3
The Arc is a circular arc interpolating the three points in sequence.
FIG. 6 illustrates Line 61 and Arc 62 objects, dependent on 2 and 3 point objects 63 respectively.

<u>B-spline curve</u> (BCurve): type, point1, point2, .... pointN
type gives the B-spline order: 1 = linear, 2 = quadratic, etc.
The named points are the vertices in sequence.

$$x(t) = \sum_{i=1}^{N} x_i \, B_i(t)$$

FIG. 7 illustrates a B-Spline Curve object 71, dependent on a multiplicity of point objects 72; and its 1-D parameter space 73.

C-spline curve (CCurve): point1, point2, .... pointN

The named points are interpolated in sequence.

The curve is a parametric cubic spline with chord-length parameterization, knots at the data points, and not-a-knot end conditions.

FIG. 8 illustrates a C-Spline Curve object 81, dependent on a multiplicity of point objects 82; and its 1-D parameter space 83.

Sub-curve (SubCurve): curve, bead1, bead2

The sub-curve $\mathbf{y}(t)$ is the portion of curve $\mathbf{x}(s)$ from 'bead1' (parameter $s_1$) to 'bead2' (parameter $s_2$):

$$y(t) = x[(1-t)\, s_1 + t\, s_2]$$

FIG. 9 illustrates a Sub-curve object 91, which is a portion of curve object 92 between two bead objects 93, 94; and the 1-D parameter spaces 95, 96 of the curve and the subcurve respectively.

Relative curve (RelCurve): curve, point1, point2

The relative curve $\mathbf{x}(t)$ is formed from curve $\mathbf{y}(t)$ and the two points $\mathbf{x}_1$, $\mathbf{x}_2$ by the linear transformation:

$$x(t) = y(t) + (1-t)\,[x_1 - y(0)] + t\,[x_2 - y(1)]$$

FIG. 10 illustrates a Relative Curve object 101, dependent on a curve object 102 and two point objects 103, 104; and its 1-D parameter space 105.

Surface class:

(All surfaces are parameterized from 0 to 1 in both u and v directions)

Ruled surface (RuledSurf): curve1, curve2

The surface is formed from the two curves $\mathbf{y}(t)$, $\mathbf{z}(t)$ by linear interpolation:

$$x(u,v) = (1-v)\, y(u) + v\, z(u)$$

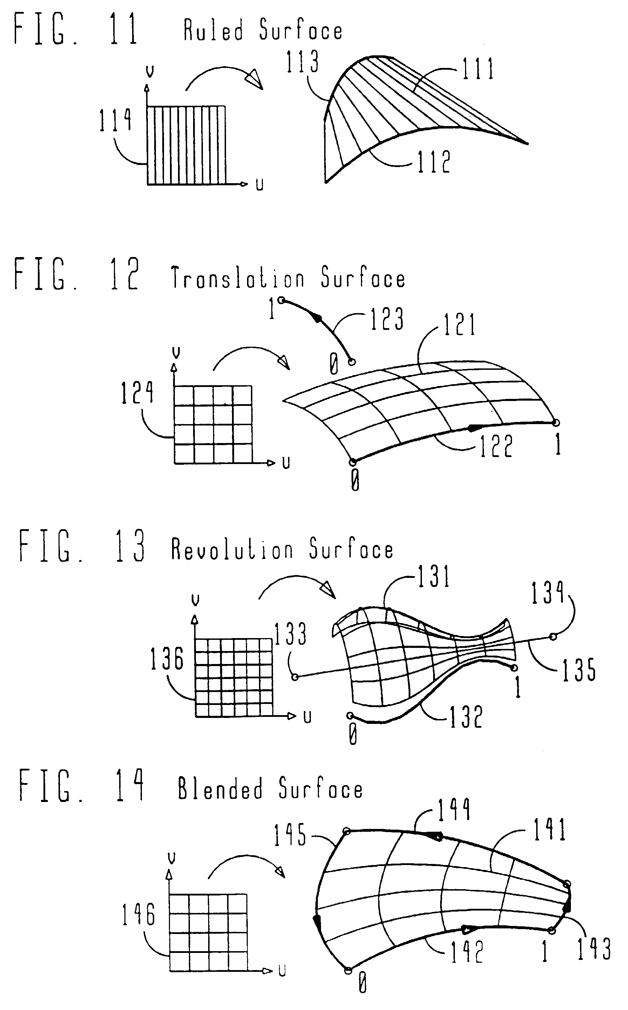

FIG. 11 illustrates a Ruled Surface object 111, dependent on two curve objects 112, 113; and its 2-D parameter space 114.

Translation surface (TranSurf): curve1, curve2

The surface is formed from the two curves $\mathbf{y}(t)$, $\mathbf{z}(t)$ by addition:

$$x(u,v) = y(u) + z(v) - z(0)$$

FIG. 12 illustrates a Translation Surface object 121, dependent on two curve objects 122, 123, and its 2-D parameter space 124.

Revolution surface (RevSurf): curve, point1, point2, angle1, angle2

The surface point at u, v is constructed by taking a point $\mathbf{y}(v)$ from 'curve', then rotating it through an angle $\theta = (1-u)\,\theta_1 + u\,\theta_2$ about the axis line from 'point1' to 'point2'.

FIG. 13 illustrates a Revolution Surface object 131, dependent on one curve object 132 and two point objects 133, 134 which define an axis 135; and its 2-D parameter space 136.

Blended surface (BlendSurf): curve1, curve2, curve3, curve4

The surface is a bilinear Coons patch constructed from the four curves. If the four curves are oriented end-to-end as in FIG. 14, the equation for locating a surface point is:

$$x(u,v) = (1-v)\, x_1(u) + v\, x_3(1-u) + (1-u)\, x_4(1-v) + u\, x_2(v) - (1-u)\,(1-v)\,[x_1(0) + x_4(1)]/2$$
$$- u\,(1-v)\,[x_1(1) + x_2(0)]/2 - u\, v\,[x_2(1) + x_3(0)]/2 - (1-u)\, v\,[x_3(1) + x_4(0)]/2$$

FIG. 14 illustrates a Blended Surface object 141, dependent on four curve objects 142, 143, 144, 145; and its 2-D parameter space 146.

C-lofted surface (CLoftSurf): curve1, curve2, .... curveN

A surface point $x(u,v)$ is obtained in three stages: (1) from each curve i take the point $x_i(u)$; (2) form the C-spline curve which interpolates the $x_i(u)$ in sequence; (3) evaluate the C-spline at parameter $v$.

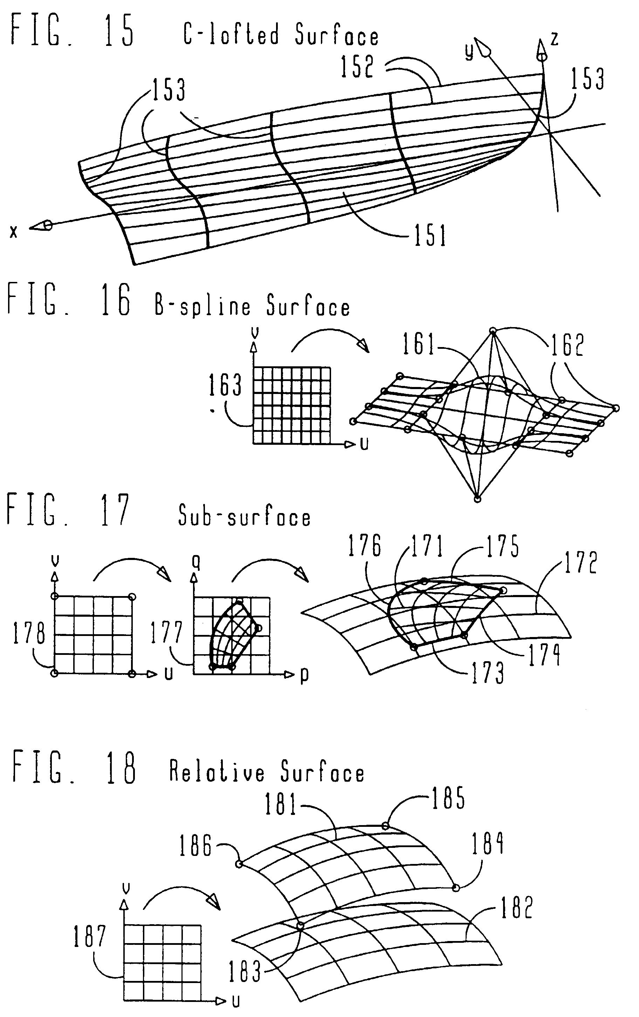

FIG. 15 illustrates a C-Lofted Surface object 151, consisting of an infinitude of C-splines 152 interpolating several curve objects 153.

B-spline tensor product surface (BSurf): typeU, typeV, N, M, point11, point12, .... pointNM

typeU, typeV give the B-spline orders for u and v directions. N, M are numbers of vertices in u, v directions. point11, point12, .... pointNM are a rectangular net of control points.

$$x(u,v) = \sum_{i=1}^{N} \sum_{j=1}^{M} x_{ij}\, B_i(u)\, B_j(v)$$

FIG. 16 illustrates a B-spline Surface object 161, dependent on an array of point objects 162; and its 2-D parameter space 163.

Sub-surface (SubSurf): surface, snake1, snake2, snake3, snake4

The sub-surface is a portion of surface $y(p,q)$ bounded by the four snakes $w_1$, $w_2$, $w_3$, $w_4$ in end-to-end sequence.

$$x(u,v) = y(w) \text{ where}$$

$$w = \{p,q\} = (1-v)\, w_1(u) + v\, w_3(1-u) + (1-u)\, w_4(1-v) + u\, w_2(v) - (1-u)(1-v)\,[w_1(0) + w_4(1)]/2$$
$$- u(1-v)\,[w_1(1) + w_2(0)]/2 - u\,v\,[w_2(1) + w_3(0)]/2 - (1-u)\,v\,[w_3(1) + w_4(0)]/2$$

FIG. 17 illustrates a Sub-surface object 171, dependent on a surface object 172, four snake objects 173, 174, 175, 176; and the 2-D parameter spaces 177, 178 of the surface and the sub-surface respectively.

Relative surface (RelSurf): surface, point1, point2, point3, point4

The relative surface $x(u,v)$ is formed from surface $y(u,v)$ and the four corner points $x_1$, $x_2$, $x_3$, $x_4$ by the bilinear transformation:

$$x(u,v) = y(u,v) + (1-u)(1-v)\,[x_1 - y(0,0)] + u(1-v)\,[x_2 - y(1,0)] + v(1-u)\,[x_3 - y(1,1)] + u\,v\,[x_4 - y(0,1)\}$$

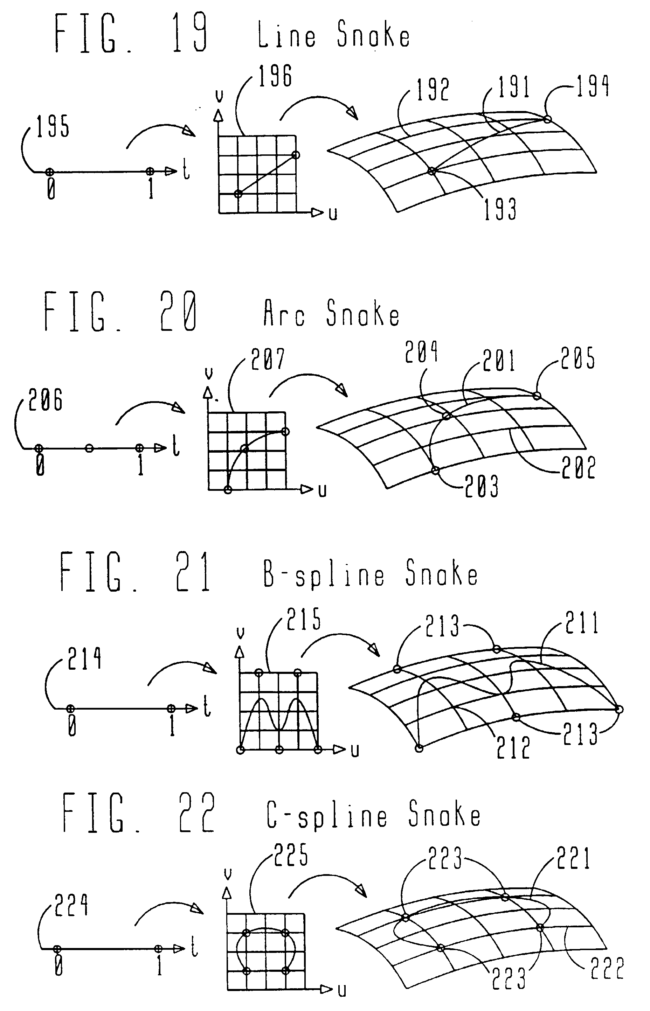

FIG. 18 illustrates a Relative Surface object 181, dependent on a surface object 182 and four point objects 183, 184, 185, 186; and its 2-D parameter space 187.

Snake class:

(All snakes are parameterized from 0 to 1. A snake is evaluated by first locating a point $w = \{u,v\}$ in the parameter space of the surface, then evaluating the surface with those parameter values.)

Line snake (LineSnake) : magnet1, magnet2

The LineSnake is a straight line in u, v parameter space from 'magnet1' ($w_1 = (u_1, v_1)$) to 'magnet2' ($w_2 = \{u_2, v_2\}$):

$$w(t) = (1-t)\, w_1 + t\, w_2$$

FIG. 19 illustrates a Line Snake object 191, dependent on a surface object 192 and two magnet objects 193, 194; and the 1-D parameter space 195 of the snake; and the 2-D parameter space 196 of the surface.

Arc snake (ArcSnake): magnet1, magnet2, magnet3

The ArcSnake is a circular arc in u, v parameter space interpolating the three magnets.

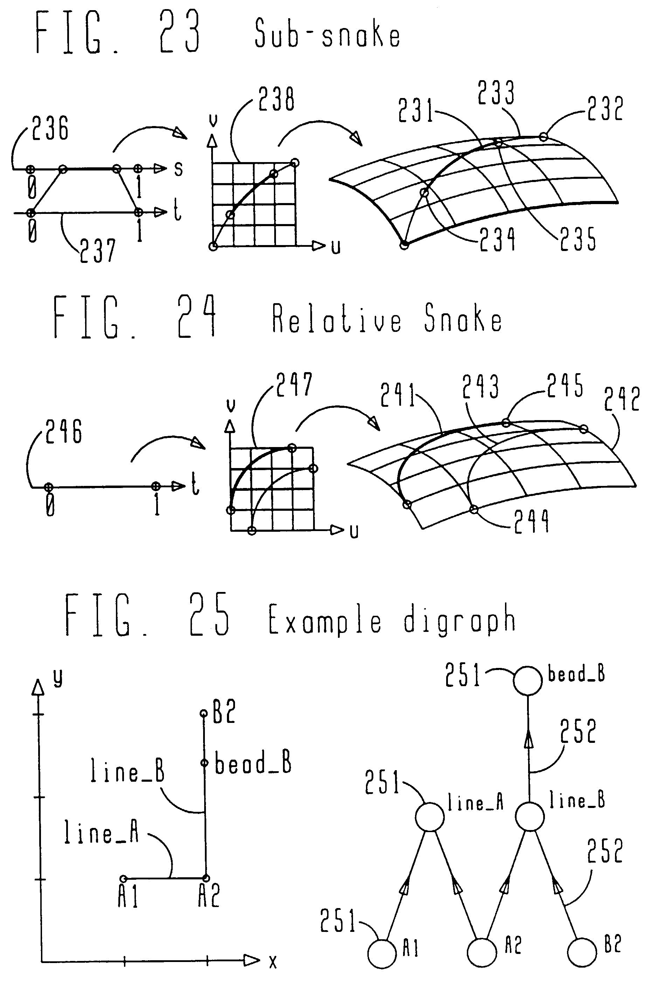

FIG. 20 illustrates an Arc Snake object 201, dependent on a surface object 202 and three magnet objects 203, 204, 205; and the 1-D parameter space 206 of the snake; and the 2-D parameter space 207 of the surface.

B-spline snake (BSnake): type, magnet1, magnet2, .... magnetN
   type gives the B-spline order: 1 = linear, 2 = quadratic, etc. The named magnets are the vertices in sequence.

$$w(t) = \sum_{i=1}^{N} w_i \, B_i(t)$$

FIG. 21 illustrates a B-spline Snake object 211, dependent on a surface object 212 and multiple magnet objects 213; and the 1-D parameter space 214 of the snake; and the 2-D parameter space 215 of the surface.

C-spline snake (CSnake): magnet1, magnet2, .... magnetN
   The named magnets are interpolated in sequence.
   The snake is a parametric cubic spline in the u, v parameter space with chord-length parameterization, knots at the data points, and not-a-knot end conditions. FIG. 22 illustrates a C-spline Snake object 221, dependent on a surface object 222 and multiple magnet objects 223; and the 1-D parameter space 224 of the snake; and the 2-D parameter space 225 of the surface.

Sub-snake (SubSnake): snake, ring1, ring2
   The sub-snake $w(t)$ is the portion of 'snake' $p(s)$ from 'ring1' (parameter $s_1$) to 'ring2' (parameter $s_2$):

$$w(t) = p[(1-t) \, s_1 + t \, s_2]$$

FIG. 23 illustrates a Sub-snake object 231, dependent on a surface object 232, a snake object 233, and two ring objects 234, 235; and the 1-D parameter spaces 236, 237 of the snake and sub-snake respectively; and the 2-D parameter space 238 of the surface.

Relative snake (RelSnake): snake, magnet1, magnet2
   The relative snake $w(t)$ is formed from 'snake' $p(t)$ and the two magnets $m_1$, $m_2$ by the linear transformation:

$$w(t) = p(t) + (1-t) \, [m_1 - p(0)] + t \, [m_2 - p(1)]$$

FIG. 24 illustrates a Relative Snake object 241, dependent on a surface object 242, a snake object 243, and two magnet objects 244, 245; and the 1-D parameter space 246 of the relative snake; and the 2-D parameter space 247 of the surface.

Logical models are stored as files in disk memory, in a text format similar to that previously outlined, but with some additional numerical parameters specifying polyline subdivisions for display. Each object is represented by a single text record beginning with the entity keyword indicated in parentheses in each of the above entity definitions. The keyword is followed by the object name, and color and visibility indices. Any curve or snake object will then have an integer telling the number of subdivisions desired for the polyline representing it in the display; any surface object will have two integers specifying the number of subdivisions in the u and v directions for the polyline mesh representing it in the display. Beyond this point, the required data for most entities is different, as indicated in the entity definitions above. The text file is terminated by the keyword "End". Remarks can be included in the text file by use of the keyword "Rem".

Internal to the program, objects are referenced by serial numbers corresponding to their sequence in the input data file, or sequence of creation. Requiring that all references be to previously defined objects is a simple way to eliminate the possibility of circular dependencies (digraph cycles). The organization of internal storage of the logical model includes a linked-list data structure representing the dependency digraph, to be used during updates of the absolute model. FIG. 25 is a digraph representing the dependencies in the "line A - line B" example developed in a previous section. The nodes 251 represent objects, and the edges 252 represent their dependencies.

The program has user-controlled capabilities for reading and writing logical-model data files in the appropriate text format, and for detecting and reporting errors and inconsistencies in a data file during read operations. The program can also read and display, simultaneous with displaying a model, one or more files representing 3-dimensional wireframes. The program can also write a 3-dimensional wireframe file of the absolute model currently displayed, or a 2-dimensional wireframe file of the current view.

Interactive capabilities are provided for creating, editing and deleting objects. Limited capabilities are provided for appropriate transmutations of objects to a different entity type; for example, any point object can be transmuted into an absolute point. In all these activities the program performs consistency checks and enforces rules ensuring the integrity of the digraph data structure. For example: all required dependencies have to be fulfilled before a newly created object is accepted into the logical model; an object cannot be deleted until all of its dependents have been deleted; circular dependencies are not permitted.

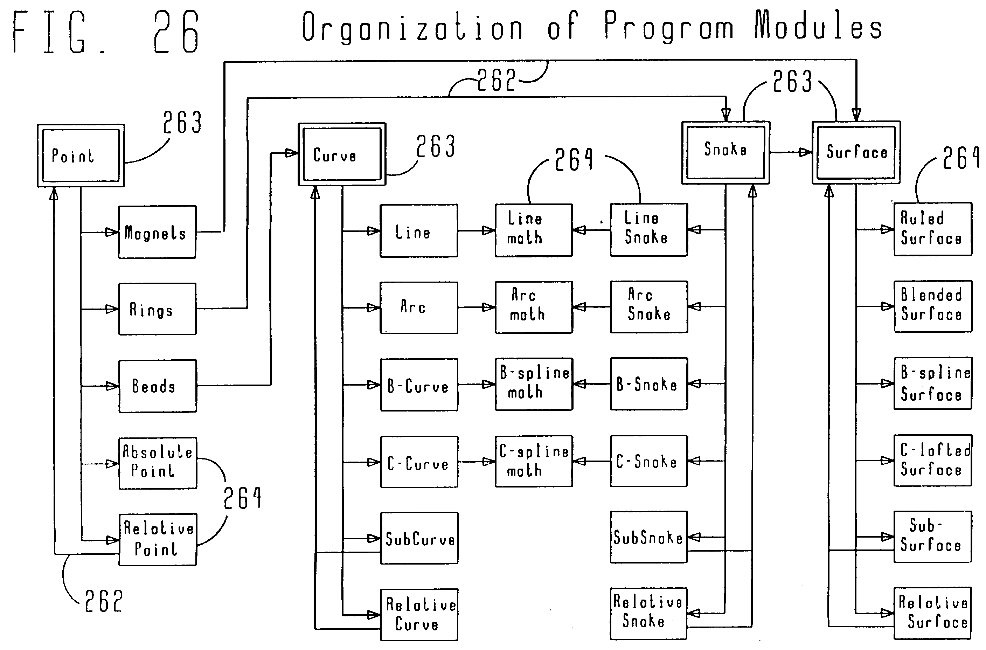

FIG. 26 shows a possible organization of program modules which accomplishes the purposes of the invention. Each box 263, 264 represents a subroutine; each arrow 262 represents a subroutine call, with the arrow directed <u>from</u> the calling module <u>to</u> the called module.

The four special modules ("primary modules", 263) labeled "Point", "Curve", "Snake" and "Surface" are the interface to any application program requiring absolute geometric information from the model. These have input and output arguments as follows:

Point -- in:   name (or index) of a point object
out:   absolute coordinates x, y, z
Curve -- in:   name (or index) of a curve object list of t parameter values
out:   list of point coordinates x, y, z
Snake -- in:   name (or index) of a snake object list of t parameter values
out:   list of point coordinates x, y, z
Surface -- in:   name (or index) of a surface object list of u parameter values list of v parameter values
out:   array of point coordinates x, y, z

(An input list of parameter values may have only a single entry, if only one point needs to be evaluated.) The other modules ("secondary modules", 264) illustrated are not intended to be called from an application, being called only by the primary modules, as indicated by arrows, or in some cases by other secondary modules.

Module "Point" determines what kind of point object it is evaluating and branches to the secondary routine, as indicated. Similarly, "Curve", "Snake" and "Surface" are basically branches to their constituent secondary routines.

"Line" and "Line Snake" routines share a common "Line math" routine; similarly, the other curves and snakes share common math routines. The math routines are able to operate with either 2-D data (when called by a snake routine) or 3-D data (when called by a curve routine). It is obvious in FIG. 26 how easily a new parametric curve, snake, or surface entity can be added to the system; it requires only the addition of one secondary module implementing the new entity, and a small modification of one primary module, adding a branch to the new secondary module.

Evaluation of some entities requires calls to other primary modules, as indicated; for example, a bead requires evaluation of a curve; a snake requires evaluation of a surface.

Some recursive calls are apparent as cycles in FIG. 26. For example, to locate a relative point, the program first needs to locate the basis point, no matter what kind of point object the basis point is. Thus, "Relative Point" must be able to call "Point". Similarly, "SubCurve" and "Relative Curve" must be able to call "Curve"; "SubSnake" and "Relative Snake" must be able to call "Snake"; and "SubSurface" and "Relative Surface" must be able to call "Surface".

Other potentially recursive calls to the primary routines are needed, which are not here indicated by arrows, because the arrows showing all such possibilities would be too numerous. For example, "Line", "Arc", "B-Curve" and "C-Curve" all need to evaluate their supporting points, by a series of calls to "Point". "Line Snake", "Arc Snake", "B-Snake" and "C-Snake" need to evaluate the u,v parameters of each of their supporting magnet objects, by a series of calls to "Magnet" or "Ring". The several surface routines need to evaluate various point, curve or snake objects, according to their individual constitutions; these are all done through calls to the primary modules.

Further levels of recursion occur when, for example, one curve supporting the surface being evaluated is a snake on another surface. In this case the sequence of calls passes through "Surface" twice. It is easy to think up cases with arbitrarily long chains of dependency. All such recursive possibilities are accommodated by the program structure indicated in FIG. 26. Without recursion, the program complexity and size would grow extremely rapidly with the allowable depth of dependency; with recursion, only stack space is required to indefinitely extend the permitted depth of dependency.

<u>EXAMPLE APPLICATION OF THE PREFERRED EMBODIMENT</u>

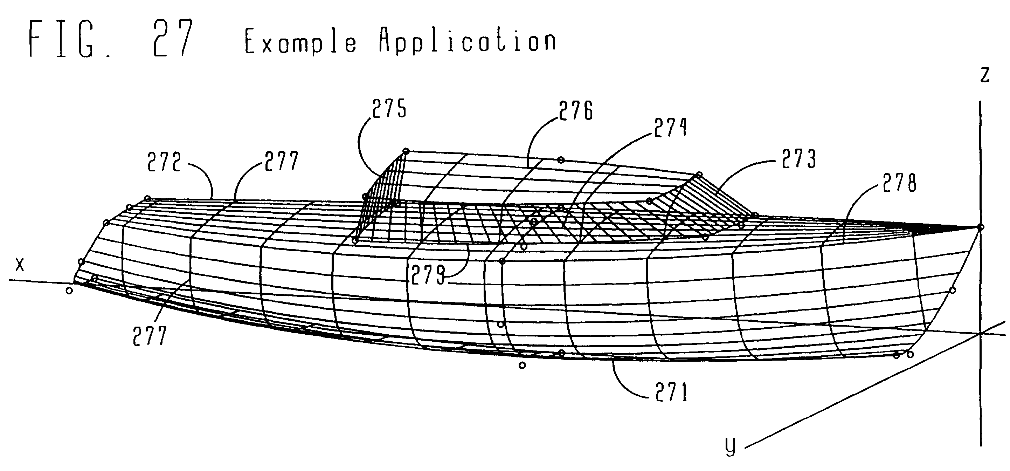

Table 1 is a text representation of an example logical model utilizing a variety of point, curve and snake objects, and six interconnected surface objects of various types, as defined and outlined above. FIG. 27 is a wireframe representation of the resulting absolute model. The example comprises hull, deck and cabin surfaces for a 30-foot sailing yacht design.

The example model has six surface objects: 'hull' 271 and 'deck' 272 are C-lofted surfaces; 'cabin_fwd' 273, 'cabin_side' 274, and 'cabin_aft' 275 are ruled surfaces; and 'cabin_top' 276 is a blended surface. The surfaces all have visibility 2, which causes only the parameter lines in the v-direction to be displayed. Eleven transverse sections 277 through the model are also displayed for purposes of visualizing the shapes.

'hull' is a C-lofted surface with three B-spline master curves 'MCA', 'MCB', 'MCC', each having four absolute points as vertices. 'deck' also has three master curves; the first is the single point 'MCAV1', the other two are 3-vertex B-spline curves 'deck_beam' and 'transom'. The join 278 between 'hull' and 'deck' is accurate and durable because the C-splines at the adjoining edges on each surface use the same data points, viz. 'MCAV1', 'MCBV1', 'MCCV1', and therefore are identical curves.

The three ruled surfaces 'cabin_fwd', 'cabin_side', 'cabin_aft' are constructed in a similar fashion to one another; each uses a snake on 'deck' as one edge, providing an accurate and durable join 279 to the 'deck' surface, and a relative curve dependent on that snake as the second (upper) edge. The three snakes on 'deck' join each other accurately and durably because they share common endpoint data, viz. magnets 'dm3' and 'dm5'. The three relative curves top_fwd', 'top_side', 'top_aft' also join each other accurately and durably because they are constructed using common end points, viz. relative points 'rp3' and 'rp5'. 'cabin_side' joins the other two surfaces accurately because its end rulings are the lines 'dm3'-'rp3' and 'dm5'-'rp5', which are identical to end rulings on the adjoining surfaces.

The blended surface 'cabin_top' joins the three ruled surfaces accurately because it uses their upper edge curves 'top_fwd', 'top_side', 'top_aft' as data. Its fourth side is a three-vertex C-spline 'top_ctr', which lies accurately in the centerplane because each of its vertices has a zero y coordinate.

The example model as now defined can easily be transformed into an extremely wide variety of alternative shapes by changing the coordinates of absolute points, the offsets of relative points, and the parameters of magnets. An example modification which affects all six surfaces is to increase the y coordinate of 'MCBV1', Following any such change, the connectivity and relative positioning of the several surfaces is automatically preserved as the absolute model is updated.

TABLE 1

Text representation of logical model for the example application.

(Entity keyword; name; color; visibility; variable entity data)

```
Rem 3x4 cloft hull with deck and cabin for patent example
AbsPoint  MCAV1     14  1   0.00   0.00   3.60;
AbsPoint  MCAV2     14  1   1.00   0.00   1.41;
AbsPoint  MCAV3     14  1   2.50   0.00  -0.84;
AbsPoint  MCAV4     14  1   3.00   0.00  -0.90;
BCurve    MCA       12  1  20   2
          { MCAV1   MCAV2   MCAV3   MCAV4 };
AbsPoint  MCBV1     14  1  15.00   5.84   2.64;
AbsPoint  MCBV2     14  1  15.00   6.00   0.54;
AbsPoint  MCBV3     14  1  15.00   3.90  -1.20;
AbsPoint  MCBV4     14  1  15.00   0.00  -1.44;
BCurve    MCB       12  1  20   2
          { MCBV1   MCBV2   MCBV3   MCBV4 };
AbsPoint  MCCV1     14  1  30.00   3.50   2.76;
AbsPoint  MCCV2     14  1  30.90   3.50   1.41;
AbsPoint  MCCV3     14  1  31.70   2.50   0.22;
AbsPoint  MCCV4     14  1  31.70   0.00   0.22;
BCurve    MCC       12  1  20   2
          { MCCV1   MCCV2   MCCV3   MCCV4 };
CLoftSurf hull      10  2  20  30   0   { MCA   MCB   MCC };
AbsPoint  transom0  14  1  29.80   0.00   3.00;
AbsPoint  transom1  14  1  29.80   1.75   3.00;
BCurve    transom   10  1  10   2
          { MCCV1   transom1   transom0 };
AbsPoint  deck_ctr  14  1  15.00   0.00   3.45;
AbsPoint  deck_mid  14  1  15.00   2.70   3.45;
BCurve    deck_beam 10  1  10   2
          { MCBV1   deck_mid   deck_ctr };
CLoftSurf deck       7  2   8  10
          { MCAV1   deck_beam   transom };
AbsMagnet dm1       11  1  deck   1.00   0.27;
AbsMagnet dm2       11  1  deck   0.63   0.27;
AbsMagnet dm3       11  1  deck   0.35   0.30;
AbsMagnet dm4       11  1  deck   0.20   0.50;
AbsMagnet dm5       11  1  deck   0.20   0.70;
AbsMagnet dm6       11  1  deck   1.00   0.70;
BSnake    footprint_fwd  11  1  10   2
          { dm1   dm2   dm3 };
BSnake    footprint_side 11  1  20   2
          { dm3   dm4   dm5 };
LineSnake footprint_aft  11  1  10   dm5   dm6 ;
RelPoint  rp1       11  1  dm1    2.00   0.00   1.30;
RelPoint  rp3       11  1  dm3    2.00   0.00   1.10;
RelPoint  rp5       11  1  dm5   -0.20  -0.50   1.40;
RelPoint  rp6       11  1  dm6   -0.30   0.00   1.80;
```

```
RelPoint   rp7   11   1   deck_ctr   0.00   0.00   1.65;
RelCurve   top_fwd   11   1   10   footprint_fwd   rp1   rp3;
RelCurve   top_side   11   1   20   footprint_side   rp3   rp5;
RelCurve   top_aft   11   1   10   footprint_aft   rp5   rp6;
RuledSurf   cabin_fwd   11   2   10   1
       footprint_fwd   top_fwd ;
RuledSurf   cabin_side   11   2   20   1
       footprint_side   top_side ;
RuledSurf   cabin_aft   11   2   10   1
       footprint_aft   top_aft ;
CCurve   top_ctr   11   1   10   2
       { rp1   rp7   rp6 };
BlendSurf cabin_top 14 2 4 5
       { top_fwd top_side top_aft top_ctr };
End
```

**Claims**

1. A method of computer aided design of geometric models constructed from a multiplicity of geometric elements such as points, curves and surfaces in a design space of two or more dimensions, said method comprising:

   defining and supporting a set of geometric entities for use in constructing said geometric models, each of said geometric entities being an abstract geometric object type that is adapted to be actualized into one or more corresponding geometric objects stored in computer accessible memory, each of said geometric entities requiring, for its actualization into each of said one or more corresponding geometric object, a reference to one or more elements of a valid data type;
   said geometric entities including one or more point class entities,
   wherein each of said point class entities is adapted to be actualized into one or more point class objects, each of said point class objects designating a zero-dimensional point in said design space;
   said method being characterized in that said geometric entities further include one or more curve class entities, wherein each of said curve class entities is adapted to be actualized into one or more curve class objects, each of said curve class objects designating a one-dimensional continuous point set in said design space; in that said geometric entities further include one or more surface class entities,
   wherein each of said surface class entities is adapted to be actualized into one or more surface class objects, each of said surface class objects designating a two-dimensional continuous point set in said design space; and
   in that said method further comprises:
   identifying at least some of said geometric objects by corresponding unique object identifiers; and
   defining and supporting a plurality of relational entities among said set of geometric entities, each of said relational entities being adapted to be actualized into one or more corresponding relational objects stored in computer accessible memory, each of said relational entities requiring, for its actualization into each of said one or more corresponding relational objects, a reference to the object identifiers of one or more geometric objects, wherein each relational object also references the one or more object identifiers referenced by the relational entity from which it was actualized thereby establishing a dependency relationship upon the one or more other geometric objects whose object identifiers are referenced by said relational object;
   wherein at least one of said relational entities is one of said curve class entities and requires for actualization into a curve class object reference to the object identifiers of two or more point class objects; and
   wherein at least one of said relational entities is one of said surface class entities and requires for actualization into a surface class object reference to the object identifiers of two or more geometric objects selected from point class objects and curve class objects.

2. A method according to Claim 1, characterized in further comprising defining by computer implemented steps and storing in computer memory a logical geometric model made up of a collection of geometric objects that are actualized from said set of geometric entities, wherein said collection of geometric objects includes one or more relational objects, each of said relational objects being a geometric object actualized from one of said relational entities.

3. A method according to Claim 2, characterized in further comprising generating from said logical geometric model by computer implemented steps an absolute geometric model in terms of absolute coordinate geometry coordinates in the design space.

4. A method according to Claim 2, further characterized in that said collection of geometric objects comprises a directed graph data structure identifying dependencies among said collection of geometric objects.

5. A method according to Claim 4, further characterized in that the directed graph data structure is acyclic.

6. A method according to Claim 4, characterized in further comprising in response to a change of a particular geometric object that is part of the directed graph data structure, automatically updating other geometric objects in said geometric model in an order that is determined by said directed graph data structure.

7. A method according to Claim 1, further characterized in that the step of defining and supporting a plurality of geometric entities comprises defining and supporting by computer implemented steps an absolute point entity which may be actualized into one or more absolute point objects, each of which has specified absolute coordinate values of a corresponding point in said design space, and in that the step of defining and supporting a plurality of relational entities comprises defining and supporting by computer implemented steps a class of parametric curve entities, each of which may be actualized into one or more parametric curve objects, each of which depends on an ordered set of point class objects specified therein by object identifiers.

8. A method according to Claim 7, further characterized in that the step of defining and supporting said plurality of relational entities comprises defining and supporting by computer implemented steps a relative point entity which may be actualized into one or more relative point geometric objects, each of which (1) depends on another point class object specified therein by an object identifier and (2) has specified coordinate value offsets from a point in design space that corresponds to the specified point class object on which it depends.

9. A method according to Claim 7, further characterized in that the step of defining and supporting said plurality of relational entities comprises defining and supporting by computer implemented steps a line entity which may be actualized into one or more line geometric objects, each of which depends on two point class objects that are specified therein by object identifiers.

10. A method according to Claim 7, further characterized in that the step of defining and supporting said plurality of relational entities comprises defining and supporting by computer implemented steps a B-spline parametric curve entity which may be actualized into one or more B-spline parametric curve objects, each of which depends on two or more point class objects specified therein by object identifiers.

11. A method according to Claim 7, further characterized in that the step of defining and supporting said plurality of relational entities comprises defining and supporting by computer implemented steps an interpolative parametric spline curve entity, which may be actualized into one or more interpolative parametric spline curve objects, each of which depends on two or more point class objects that are specified therein by object identifiers.

12. A method according to Claim 7, further characterized in that the step of defining and supporting said plurality of relational entities comprises defining and supporting by computer implemented steps one or more bead class entities which may be actualized into one or more bead class objects, each of said bead class objects representing a point at a specified position on a parametric curve object, said one or more bead class entities including an absolute bead entity which may be actualized into one or more absolute bead objects, each of which specifies (1) a parametric curve object by its object identifier and (2) a parameter value, wherein each said absolute bead object represents a point in design space located at said specified parameter value along a parametric curve in said design space that corresponds to the parametric curve object specified therein.

13. A method according to Claim 7, further characterized in that the step of defining and supporting said plurality of relational entities comprises defining and supporting by computer implemented steps an bead class entity which may be actualized into one or more absolute bead objects, each of which specifies (1) a parametric curve object by its object identifier and (2) a parameter value, wherein each said absolute bead object represents a point in design space located at said specified parameter value along a parametric curve in said design space that corresponds to the parametric curve object specified therein.

14. A method according to Claim 12, further characterized in that the step of defining and supporting said plurality of relational entities comprises defining and supporting by computer implemented steps a subcurve entity which may be actualized into one or more subcurve objects, each of which specifies a parametric curve object by its object identifier and two bead class objects by their object identifiers, wherein each said subcurve object represents a portion of a curve that is represented by said curve class object said portion lying between points on said curve represented by said two bead class objects.

15. A method according to Claim 12, further characterized in that the step of defining and supporting said plurality of relational entities comprises defining and supporting by computer implemented steps a relative bead entity, which may be actualized into one or more relative bead objects, each of which (1) depends on a bead class object specified therein by its object identifier and (2) specifies a parameter value offset, wherein each said relative bead object represents a point in design space that (a) lies on a parametric curve in design space corresponding to the bead class object specified therein and (b) is located at the specified parameter value offset along that parametric curve from a point on said parametric curve represented by said bead class object, thereby creating a multiple level dependency relationship.

16. A method according to Claim 7, further characterized in that the step of defining and supporting a plurality of relational entities comprises defining and supporting by computer implemented steps a class of parametric surface entities, each of which may be actualized into one or more parametric surface objects, each of which depends on an ordered set of objects specified therein by object identifiers, wherein each of said one or more parametric surface objects represents a surface in design space defined by geometric shapes in design space that correspond to the ordered set of objects specified therein, thereby establishing a multiple dependency relationship of said surface with said geometric shapes.

17. A method according to Claim 16, further characterized in that said ordered set of objects is an ordered set of point class objects.

18. A method according to Claim 16, further characterized in that said ordered set of objects is an ordered set of curve class objects.

19. A method according to Claim 15, further characterized in that the step of defining and supporting a plurality of relational entities comprises defining and supporting by computer implemented steps one or more magnet class entities which may be actualized into one or more magnet class objects, each of said magnet class objects representing a point at a specified position on a parametric surface object, said one or more magnet class entities including an absolute magnet entity, which may be actualized into one or more absolute magnet objects, each of which (1) depends on a parametric surface object specified therein by its object identifier and (2) specifies parameter values, wherein each said absolute magnet object represents a point in design space located at said specified parameter values on a parametric surface in said design space that corresponds to the parametric surface object specified therein, thereby defining a point in design space that is constrained to lie on a parametric surface in a dependency relationship.

20. A method according to Claim 19, further characterized in that the step of defining and supporting a plurality of relational entities comprises defining and supporting by computer implemented steps a relative magnet entity, which may be actualized into one or more relative magnet objects, each of which (1) depends on a magnet class object specified therein by its object identifier and (2) specifies [a] parameter value offsets, wherein each said relative magnet object represents a point in design space that (a) lies on a parametric surface in design space corresponding to the magnet class object specified therein and (b) is located at the specified parameter value offsets upon that parametric surface from a point on said parametric surface that is represented by the magnet class object specified therein, thereby defining a point in design space that is constrained to lie on a parametric surface in a multiple level dependency relationship.

21. A method according to Claim 16, further characterized in that the step of defining and supporting a plurality of relational entities comprises defining and supporting by computer implemented steps a relative magnet entity, which may be actualized into one or more relative magnet objects, each of which (1) depends on a magnet class object specified therein by its object identifier and (2) specifies a parameter value offset, wherein each said relative magnet object represents a point in design space that (a) lies on a parametric surface in design space corresponding to the magnet class object specified therein and (b) is located at the specified parameter value offset along that parametric surface from a point on said parametric surface that is represented by the magnet class object specified therein, thereby defining a point in design space that is constrained to lie on a parametric surface in a multiple level dependency relationship.

22. A method according to Claim 19, further characterized in that said one or more surface class entities includes a ruled surface entity and wherein each of said one or more surface class objects actualized from said ruled surface entity is a ruled surface object which depends on an ordered set of two curve objects, wherein each of said ruled surface objects represents a surface in design space having two edges defined by curves in design space that correspond to the ordered set of two curve objects specified therein.

23. A method according to Claim 15, further characterized in that said one or more surface class entities includes is an edge-blended surface entity and wherein each of said one or more surface class objects actualized from said edge-blended surface entity is a edge-blended surface object which depends on an ordered set of four curve objects, wherein each of said edge-blended surface objects represents a bilinear Coons patch in design space having four edges defined by curves in design space that correspond to the ordered set of four curve objects specified therein.

24. A method according to Claim 15, further characterized in that said one or more surface class entities includes a lofted surface entity and wherein each of said one or more surface class objects actualized from said lofted surface entity is a lofted surface object which depends on an ordered set of three or more curve objects, wherein each of said lofted surface objects represents a surface in design space made up of an infinitude of curves that are interpolated through curves in design space which correspond to the ordered set of three or more curve objects specified therein.

25. A method according to Claim 19, further characterized in that the step of defining and supporting a plurality of relational entities comprises defining and supporting by computer implemented steps a parametric snake entity, which may be actualized into one or more parametric snake objects, each of which (1) depends on two or more magnet objects specified therein by their object identifiers and each of which depends on a common parametric surface object and (2) represents a line in design space that is constrained to lie on a parametric surface in design space that is represented by said common parametric surface object, thereby forming a multiple level dependency relationship.

26. A method according to Claim 24, further characterized in that the step of defining and supporting a plurality of relational entities comprises defining and supporting by computer implemented steps a ring class entity, which may be actualized into one or more ring class objects, each of which (1) depends on a parametric snake object specified therein by its object identifier and (2) represents a point in design space that is constrained to lie on a parametric line in design space that is represented by said parametric snake object, thereby forming a multiple level dependency relationship.

27. A method according to Claim 25, further characterized in that the step of defining and supporting a plurality of relational entities comprises defining and supporting by computer implemented steps a subsnake entity which may be actualized into one or more subsnake objects, each of which specifies therein a parametric snake object by its object identifier and two ring class objects by their object identifiers, wherein each said subsnake object represents a portion of a curve that is represented by said parametric snake object, said portion lying between points on said curve represented by said two ring class objects.

28. A method according to Claim 25, further characterized in that the step of defining and supporting a plurality of relational entities comprises defining and supporting by computer implemented steps a subsurface entity which may be actualized into one or more subsurface objects, each of which specifies therein a parametric surface object and four snake class objects by their object identifiers, wherein each said subsurface object represents a portion of a parametric surface that is represented by said parametric surface object, said portion of said parametric surface bounded by four points on said parametric surface that are represented by said snake class objects.

29. A method according to Claim 25, further characterized in that the step of defining and supporting a plurality of relational entities comprises defining and supporting by computer implemented steps a relative ring entity, which may be actualized into one or more relative ring objects, each of which (1) depends on a ring class object specified therein by its object identifier, and (2) specifies a parameter value offset, wherein each said relative ring object represents a point in design space that (a) lies on a parametric curve in said design space corresponding to the snake object on which the ring class object specified therein depends and (b) is located at the specified parameter value offset along that parametric curve from a point on said parametric curve that is represented by said ring class object, thereby establishing a multiple level dependency relationship in which said ring object defines a point in design space that is constrained to lie on a parametric curve which in turn is constrained to lie on a parametric surface.

30. A method according to Claim 3, further characterized in that the collection of geometric objects includes two of the surface class geometric objects actualized from said one or more surface class entities, each of said two surface class geometric objects depending on a common curve object which is identified therein by its object identifier, wherein said common curve object defines in design space a common edge shared by two surfaces defined by said two surface class geometric objects, and in that said method further comprises in response to a change in said common curve object, automatically updating the absolute geometric model so that said surface class geometric objects remain joined along said common edge in new shapes and locations.

31. A method according to Claim 15, further characterized in that the geometric entities supported by computer implemented steps include at least one ruled or lofted surface geometric entity which depends for actualization on two or more curve geometric objects specified by object name or number, in that two ruled or lofted surface geometric objects actualized from said ruled or lofted surface geometric entities are made to have a common edge by dependency on curve geometric objects having common endpoints, and in that said method comprises the further steps of changing one or more of said curve geometric objects, and automatically updating the geometric model so that said ruled or lofted surface geometric objects remain joined along said common edge in new shapes and locations.

32. A method according to Claim 19, further characterized in that the geometric entities supported by computer implemented steps include at least one edge-blended, ruled or lofted surface entity depending on curve objects specified by object name or number, at least one of said curve objects forming at least one edge of a surface object actualized from said edge-blended, ruled or lofted surface entity, and an edge-blended, ruled or lofted surface object actualized from said edge-blended, ruled or lofted surface entity uses a snake object, specified by object name or number, lying on some other surface object, as an edge curve, and in that said method comprises the further steps of changing said other surface object or said snake object, and automatically updating the geometric model so that said edge-blended, ruled or lofted surface object remains joined to said other surface object along said snake geometric object in new shapes and positions.

33. A method according to Claim 1, characterized in further comprising defining and supporting by computer implemented steps a point routine for evaluating point class objects, said point routine being programmed to call itself in a recursive manner.

34. A method according to Claim 1, characterized in further comprising defining and supporting by computer implemented steps a surface routine for evaluating surface class objects, said surface routine being programmed to call itself in a recursive manner.

35. A method according to Claim 1, further characterized in that the at least one of said relational entities which is one of said surface class entities has two or more references to object identifiers of other objects at least one of which includes an object identifier or a curve class object.

**Patentansprüche**

1. Verfahren zur rechnergestützten Konstruktion geometrischer Modelle, die anhand einer Vielzahl geometrischer Elemente wie z.B. Punkten, Kurven und Flächen in einem Konstruktionsraum von zwei oder mehr Dimensionen konstruiert werden, wobei das genannte Verfahren folgendes umfaßt:

Definieren und Unterstützen eines Satzes geometrischer Entities für die Verwendung bei der Konstruktion der genannten geometrischen Modelle, wobei jede der genannten geometrischen Entities ein abstrakter geometrischer Objekttyp ist, der so gestaltet ist, daß er in ein oder mehrere entsprechende geometrische Objekte umgesetzt wird, die in einem für den Rechner zugängigen Speicher gespeichert sind, wobei jede der genannten geometrischen Entitites für ihre Umsetzung in eines der genannten ein oder mehreren entsprechenden geometrischen Objekte eine Referenz zu einem oder mehreren Elementen eines gültigen Datentyps erfordert;

wobei die genannten geometrischen Entities ein oder mehrere Punkteklassen-Entities beinhalten,

wobei jede der genannten Punkteklassen-Entities so gestaltet ist, daß sie in ein oder mehrere Punkteklassen-Objekte umgesetzt werden kann, wobei jedes der genannten Punkteklassen-Objekte einen nulldimensionalen Punkt in dem genannten Konstruktionsraum bezeichnet;

wobei das genannte Verfahren dadurch gekennzeichnet ist, daß die genannten geometrischen Entities ferner ein oder mehrere Kurvenklassen-Entities beinhalten,

wobei jede der genannten Kurvenklassen-Entities so gestaltet ist, daß sie in ein oder mehrere Kurvenklassen-Objekte umgesetzt werden kann, wobei jedes der genannten Kurvenklassen-Objekte einen eindimensionalen kontinuierlichen Punktesatz in dem genannten Konstruktionsraum bezeichnet; dadurch, daß die genannten geometrischen Entities ferner ein oder mehrere Flächenklassen-Entities beinhalten,

wobei jede der genannten Flächenklassen-Entities so gestaltet ist, daß sie in ein oder mehrere Flächenklassen-Objekte umgesetzt werden kann, wobei jedes der genannten Flächenklassen-Objekte einen zweidimensionalen kontinuierlichen Punktesatz in dem genannten Konstruktionsraum bezeichnet; und

dadurch, daß das genannte Verfahren ferner folgendes umfaßt:

Identifizieren wenigstens eines der genannten geometrischen Objekte durch entsprechende eindeutige Objektkennungen; und

Definieren und Unterstützen einer Mehrzahl relationaler Entities aus dem genannten Satz geometrischer Entities, wobei jede der genannten relationalen Entities so gestaltet ist, daß sie in ein oder mehrere entsprechende relationale Objekte umgesetzt werden kann, die in dem für den Rechner zugängigen Speicher gespeichert sind, wobei jedes der genannten relationalen Entities für seine Umsetzung in jedes der genannten ein oder mehreren entsprechenden relationalen Objekte eine Referenz auf die Objektkennungen eines oder mehrerer geometrischer Objekte benötigt, wobei jedes relationale Objekt auch die ein oder mehreren Objektkennungen referenziert, die durch die relationale Entity referenziert werden, von der es umgesetzt wurde, um auf diese Weise eine Abhängigkeitsbeziehung zu dem ein oder mehreren anderen geometrischen Objekten herzustellen, deren Objektkennungen durch das genannte relationale Objekt referenziert werden;

wobei wenigstens eine der genannten relationalen Entities eines der genannten Kurvenklassen-Objekte ist und für die Umsetzung in eine Kurvenklassen-Objektreferenz zu den Objektkennungen der zwei oder mehr Punkteklassen-Objekte erfordert; und

wobei wenigstens eine der genannten relationalen Entities eine der genannten Flächenklassen-Entities ist und für die Umsetzung in ein Flächenklassen-Objekt eine Referenz auf die Objektkennungen zweier oder mehrerer geometrischer Objekte erfordert, ausgewählt aus Punkteklassen-Objekten und Kurvenklassen-Objekten.

2. Verfahren nach Anspruch 1, dadurch gekennzeichnet, daß es ferner den folgenden Schritt umfaßt:

Definieren durch rechnerimplementierte Schritte und Speichern in einem Computerspeicher eines logischen geometrischen Modells aus einer Sammlung geometrischer Objekte, die von dem genannten Satz geometrischer Entities umgesetzt wurden, wobei die genannte Sammlung geometrischer Objekte ein oder mehrere relationale Objekte beinhaltet, wobei jedes der genannten relationalen Objekte ein geometrisches Objekt ist, das von einem der genannten relationalen Entities umgesetzt wurde.

3. Verfahren nach Anspruch 2, dadurch gekennzeichnet, daß es ferner den Schritt des Erzeugens eines absoluten geometrischen Modells im Sinne von Koordinaten der Absolutkoordinatengeometrie im Konstruktionsraum anhand des genannten logischen geometrischen Modells durch rechnerimplementierte Schritte beinhaltet.

4. Verfahren nach Anspruch 2, ferner dadurch gekennzeichnet, daß die genannte Sammlung geometrischer Objekte eine gerichtete Kurvendatenstruktur umfaßt, die Abhängigkeiten innerhalb der genannten Sammlung geometrischer Objekte identifiziert.

5. Verfahren nach Anspruch 4, ferner dadurch gekennzeichnet, daß die gerichtete Kurvendatenstruktur azyklisch ist.

6. Verfahren nach Anspruch 4, ferner dadurch gekennzeichnet, daß es als Reaktion auf eine Änderung eines bestimmten geometrischen Objekts, das Teil der gerichteten Kurvendatenstruktur ist, den Schritt des automatischen Aktualisierens anderer geometrischer Objekte in dem genannten geometrischen Modell in einer Reihenfolge umfaßt, die durch die genannte gerichtete Kurvendatenstruktur bestimmt wird.

7. Verfahren nach Anspruch 1, ferner dadurch gekennzeichnet, daß der Schritt des Definierens und Unterstützens einer Mehrzahl geometrischer Entities das Definieren und Unterstützen einer Absolutpunkte-Entity durch rechnerimplementierte Schritte umfaßt, die in ein oder mehrere Absolutpunkte-Objekte umgesetzt werden können, die jeweils vorgegebene Absolutkoordinatenwerte eines entsprechenden Punktes in dem genannten Konstruktionsraum haben, und dadurch, daß der Schritt des Definierens und Unterstützens einer Mehrzahl relationaler Entities das Definieren und Unterstützen einer Klasse parametrischer Kurvenentities durch rechnerimplementierte Schritte umfaßt, die jeweils in ein oder mehrere parametrische Kurvenobjekte umgesetzt werden können, die jeweils von einem geordneten Satz von darin durch Objektkennungen vorgegebenen Punkteklassen-Objekten abhängig sind.

8. Verfahren nach Anspruch 7, ferner dadurch gekennzeichnet, daß der Schritt des Definierens und Unterstützens der genannten Mehrzahl relationaler Entities das Definieren und Unterstützen einer Relativpunkte-Entity durch rechnerimplementierte Schritte umfaßt, die in ein oder mehrere relativpunktgeometrische Objekte umgesetzt werden können, die jeweils (1) von einem anderen durch eine Objektkennung darin vorgegebenen Punkteklassen-Objekt abhängig sind, und (2) vorgegebene Koordinatenwertversätze von einem Punkt im Konstruktionsraum haben, der dem vorgegebenen Punkteklassen-Objekt entspricht, von dem er abhängig ist.

9. Verfahren nach Anspruch 7, ferner dadurch gekennzeichnet, daß der Schritt des Definierens und Unterstützens der genannten Mehrzahl relationaler Entities das Definieren und Unterstützen einer Linien-Entity durch rechnerimplementierte Schritte umfaßt, die in ein oder mehrere liniengeometrische Objekte umgesetzt werden können, die jeweils von zwei Punkteklassen-Objekten abhängig sind, die durch Objektkennungen darin vorgegeben sind.

10. Verfahren nach Anspruch 7, ferner dadurch gekennzeichnet, daß der Schritt des Definierens und Unterstützens der genannten Mehrzahl relationaler Entities das Definieren und Unterstützen einer parametrischen B-Spline-Kurven-Entity durch rechnerimplementierte Schritte umfaßt, die in ein oder mehrere parametrische B-Spline-Kurvenobjekte umgesetzt werden können, die jeweils von zwei oder mehr Punkteklassen-Objekten abhängig sind, die anhand von Objektkennungen darin vorgegeben sind.

11. Verfahren nach Anspruch 7, ferner dadurch gekennzeichnet, daß der Schritt des Definierens und Unterstützens der genannten Mehrzahl relationaler Entities das Definieren und Unterstützen einer interpolativen parametrischen Spline-Kurven-Entity durch rechnerimplementierte Schritte umfaßt, die in ein oder mehrere interpolative parametrische Spline-Kurven-Objekte umgesetzt werden können, die jeweils von zwei oder mehr Punkteklassen-Objekten abhängig sind, die anhand von Objektkennungen darin vorgegeben sind.

12. Verfahren nach Anspruch 7, ferner dadurch gekennzeichnet, daß der Schritt des Definierens und Unterstützens der genannten Mehrzahl relationaler Entities das Definieren und Unterstützen einer oder mehrerer Kugelklassen-Entities durch rechnerimplementierte Schritte umfaßt, die in ein oder mehrere Kugelklassenobjekte umgesetzt werden können, wobei jedes der genannten Kugelklassenobjekte einen Punkt an einer bestimmten Position auf einem parametrischen Kurvenobjekt repräsentiert, wobei die genannten ein oder mehreren Kugelklassen-Entities eine absolute Kugel-Entity beinhalten, die in ein oder mehrere absolute Kugelobjekte umgesetzt werden können, die jeweils (1) ein parametrisches Kurvenobjekt anhand seiner Objektkennung und (2) einen Parameterwert vorgeben, wobei jedes der genannten absoluten Kugelobjekte einen Punkt im Konstruktionsraum repräsentiert, der sich an dem genannten vorgegebenen Parameterwert entlang einer parametrischen Kurve in dem genannten Konstruktionsraum befindet, der dem darin vorgegebenen parametrischen Kurvenobjekt entspricht.

13. Verfahren nach Anspruch 7, ferner dadurch gekennzeichnet, daß der Schritt des Definierens und Unterstützens der genannten Mehrzahl relationaler Entities das Definieren und Unterstützen einer Kugelklassen-Entity durch rechnerimplementierte Schritte umfaßt, die in ein oder mehrere absolute Kugelobjekte umgesetzt werden kann, die jeweils (1) ein parametrisches Kurvenobjekt anhand seiner Objektkennung und (2) einen Parameterwert vorgeben, wobei jedes genannte absolute Kugelobjekt einen Punkt im Konstruktionsraum repräsentiert, der sich an dem genannten vorgegebenen Parameterwert entlang einer parametrischen Kurve in dem genannten Konstruktionsraum befindet, der dem darin vorgegebenen parametrischen Kurvenobjekt entspricht.

14. Verfahren nach Anspruch 12, ferner dadurch gekennzeichnet, daß der Schritt des Definierens und Unterstützens der genannten Mehrzahl relationaler Entities das Definieren und Unterstützen einer Subkurven-Entity mit rechnerimplementierten Schritten umfaßt, die in ein oder mehrere Subkurvenobjekte umgesetzt werden kann, die jeweils ein parametrisches Kurvenobjekt anhand seiner Objektkennung und zwei Kugelklassenobjekte anhand ihrer Objektkennungen vorgeben, wobei jedes genannte Subkurvenobjekt einen Abschnitt einer Kurve repräsentiert, der durch das genannte Kurvenklassenobjekt repräsentiert wird, wobei der genannte Abschnitt zwischen Punkten auf der genannten Kurve liegt, die durch die genannten beiden Kugelklassenobjekte repräsentiert wird.

**15.** Verfahren nach Anspruch 12, ferner dadurch gekennzeichnet, daß der Schritt des Definierens und Unterstützens der genannten Mehrzahl relationaler Entities das Definieren und Unterstützen einer relativen Kugel-Entity mit rechnerimplementierten Schritten umfaßt, die in ein oder mehrere relative Kugelobjekte umgesetzt werden kann, die jeweils (1) von einem Kugelklassenobjekt abhängen, das anhand seiner Objektkennung darin vorgegeben ist, und (2) einen Parameterwertversatz vorgeben, wobei jedes genannte relative Kugelobjekt einen Punkt im Konstruktionsraum repräsentiert, der (a) auf einer parametrischen Kurve im Konstruktionsraum liegt, die dem darin vorgegebenen Kugelklassenobjekt entspricht, und (b) sich an dem vorgegebenen Parameterwertversatz entlang dieser parametrischen Kurve von einem Punkt auf der genannten parametrischen Kurve befindet, der durch das genannte Kugelklassenobjekt repräsentiert wird, um dadurch eine Mehrebenen-Abhängigkeitsbeziehung zu schaffen.

**16.** Verfahren nach Anspruch 7, ferner dadurch gekennzeichnet, daß der Schritt des Definierens und Unterstützens einer Mehrzahl relationaler Entities das Definieren und Unterstützen einer Klasse parametrischer Flächen-Entities durch rechnerimplementierte Schritte umfaßt, die jeweils in ein oder mehrere parametrische Flächenobjekte umgesetzt werden können, die jeweils von einem geordneten Satz von Objekten abhängig sind, die darin durch Objektkennungen vorgegeben sind, wobei jedes der genannten ein oder mehreren parametrischen Flächenobjekte eine Fläche im Konstruktionsraum repräsentiert, die durch geometrische Formen im Konstruktionsraum definiert wird, die dem geordneten Satz darin vorgegebener Objekte entsprechen, um so eine mehrfache Abhängigkeitsbeziehung der genannten Fläche zu den genannten geometrischen Formen herzustellen.

**17.** Verfahren nach Anspruch 16, ferner dadurch gekennzeichnet, daß der genannte geordnete Satz von Objekten ein geordneter Satz von Punkteklassenobjekten ist.

**18.** Verfahren nach Anspruch 16, ferner dadurch gekennzeichnet, daß der genannte geordnete Satz von Objekten ein geordneter Satz von Kurvenklassenobjekten ist.

**19.** Verfahren nach Anspruch 15, ferner dadurch gekennzeichnet, daß der Schritt des Definierens und Unterstützens einer Mehrzahl relationaler Entities das Definieren und Unterstützen von ein oder mehreren Magnetklassen-Entities durch rechnerimplementiere Schritte umfaßt, die in ein oder mehrere Magnetklassenobjekte umgesetzt werden können, wobei jedes der genannten Magnetklassenobjekte einen Punkt an einer bestimmten Position auf einem parametrischen Flächenobjekt repräsentiert, wobei die genannten ein oder mehreren Magnetklassen-Entities eine absolute Magnet-Entity beinhalten, die in ein oder mehrere absolute Magnetobjekte umgesetzt werden können, die jeweils (1) von einem darin anhand seiner Objektkennung vorgegebenen parametrischen Flächenobjekt abhängig sind, und (2) Parameterwerte vorgeben, wobei jedes genannte absolute Magnetobjekt einen Punkt im Konstruktionsraum repräsentiert, der sich an den genannten vorgegebenen Parameterwerten auf einer parametrischen Fläche in dem genannten Konstruktionsraum befindet, die dem darin vorgegebenen parametrischen Flächenobjekt entspricht, um so einen Punkt im Konstruktionsraum zu definieren, der auf eine Lage auf einer parametrischen Fläche in einer Abhängigkeitsbeziehung beschränkt ist.

**20.** Verfahren nach Anspruch 19, ferner dadurch gekennzeichnet, daß der Schritt des Definierens und Unterstützens einer Mehrzahl relationaler Entities das Definieren und Unterstützen einer relativen Magnet-Entity durch rechnerimplementierte Schritte umfaßt, die in ein oder mehrere relative Magnetobjekte umgesetzt werden kann, die jeweils (1) von einem darin anhand seiner Objektkennung vorgegebenen Magnetklassenobjekt abhängig sind, und (2) [a] Parameterwertversätze vorgibt, wobei jedes genannte relative Magnetobjekt einen Punkt im Konstruktionsraum repräsentiert, der (a) auf einer parametrischen Fläche im Konstruktionsraum liegt, die dem darin vorgegebenen Magnetklassenobjekt entspricht, und (b) sich an den vorgegebenen Parameterwertversätzen auf dieser parametrischen Fläche von einem Punkt auf der genannten parametrischen Fläche befindet, der durch das darin vorgegebene Magnetklassenobjekt repräsentiert wird, um so einen Punkt im Konstruktionsraum zu definieren, der auf eine Lage auf einer parametrischen Fläche in einer Mehrebenen-Abhängigkeitsbeziehung beschränkt ist.

**21.** Verfahren nach Anspruch 16, ferner dadurch gekennzeichnet, daß der Schritt des Definierens und Unterstützens einer Mehrzahl relationaler Entities das Definieren und Unterstützen einer relativen Magnet-Entity durch rechnerimplementierte Schritte umfaßt, die in ein oder mehrere relative Magnetobjekte umgesetzt werden kann, die jeweils (1) von einem anhand seiner Objektkennung darin vorgegebenen Magnetklassenobjekt abhängig sind, und (2) einen Parameterwertversatz vorgeben, wobei jedes genannte relative Magnetobjekt einen Punkt im Konstruktionsraum repräsentiert, der (a) auf einer parametrischen Fläche im Konstruktionsraum liegt, die dem darin vorgegebenen Magnetklassenobjekt entspricht, und (b) sich an dem vorgegebenen Parameterwertversatz entlang dieser parametrischen Fläche von einem Punkt auf der genannten parametrischen Fläche befindet, der durch das darin vorgegebene Magnetklassenobjekt repräsentiert wird, um so einen Punkt im Konstruktionsraum zu definieren, der auf eine Lage auf einer parametrischen Fläche in einer Mehrebenen-Abhängigkeitsbeziehung beschränkt ist.

22. Verfahren nach Anspruch 19, ferner dadurch gekennzeichnet, daß die genannten ein oder mehreren Flächenklassen-Entities eine Regelflächen-Entity beinhalten und wobei jedes der genannten ein oder mehreren Flächenklassenobjekte, die von der genannten Regelflächen-Entity umgesetzt wurden, ein Regelflächenobjekt ist, das von einem geordneten Satz von zwei Kurvenobjekten abhängig ist, wobei jedes der genannten Regelflächenobjekte eine Fläche im Konstruktionsraum repräsentiert, die zwei Kanten aufweist, die durch Kurven im Konstruktionsraum definiert werden, die dem geordneten Satz zweier darin vorgegebener Kurvenobjekte entsprechen.

23. Verfahren nach Anspruch 15, ferner dadurch gekennzeichnet, daß die genannten ein oder mehreren Flächenklassen-Entities eine kantenangeglichene Flächen-Entity beinhalten, und wobei jedes der genannten ein oder mehreren Flächenklassenobjekte, die von der genannten kantenangeglichenen Flächen-Entity umgesetzt wurden, ein kantenangeglichenes Flächenobjekt ist, das von einem geordneten Satz von vier Kurvenobjekten abhängig ist, wobei jedes der genannten kantenangeglichenen Flächenobjekte einen bilinearen Coons-Patch im Konstruktionsraum repräsentiert, der vier Kanten aufweist, die durch Kurven im Konstruktionsraum definiert werden, die dem geordneten Satz von darin vorgegebenen vier Kurvenobjekten entsprechen.

24. Verfahren nach Anspruch 15, ferner dadurch gekennzeichnet, daß die genannten ein oder mehreren Flächenklassen-Entities eine erhabene Flächen-Entity beinhalten und wobei jedes der genannten ein oder mehreren Flächenklassenobjekte, die von der genannten erhabenen Flächen-Entity umgesetzt wurden, ein erhabenes Flächenobjekt ist, das von einem geordneten Satz von drei oder mehr Kurvenobjekten abhängig ist, wobei jedes der genannten erhabenen Flächenobjekte eine Fläche im Konstruktionsraum repräsentiert, die sich aus einer Infinität von Kurven zusammensetzt, die durch Kurven im Konstruktionsraum interpoliert wurden, die dem geordneten Satz von drei oder mehr hierin vorgegebenen Kurvenobjekten entsprechen.

25. Verfahren nach Anspruch 19, ferner dadurch gekennzeichnet, daß der Schritt des Definierens und Unterstützens einer Mehrzahl relationaler Entities das Definieren und Unterstützen einer parametrischen Schlangen-Entity durch rechnerimplementierte Schritte umfaßt, die in ein oder mehrere parametrische Schlangenobjekte umgesetzt werden können, die jeweils (1) von zwei oder mehr hierin anhand ihrer Objektkennungen vorgegebenen Magnetobjekten abhängig sind und die jeweils von einem gemeinsamen parametrischen Flächenobjekt abhängig sind, und (2) eine Linie im Konstruktionsraum repräsentieren, die auf eine Lage auf einer parametrischen Fläche im Konstruktionsraum beschränkt ist, die durch das genannte gemeinsame parametrische Flächenobjekt repräsentiert wird, um so eine Mehrebenen-Abhängigkeitsbeziehung zu bilden.

26. Verfahren nach Anspruch 24, ferner dadurch gekennzeichnet, daß der Schritt des Definierens und Unterstützens einer Mehrzahl relationaler Entities das Definieren und Unterstützen einer Ringeklassen-Entity durch rechnerimplementierte Schritte umfaßt, die in ein oder mehrere Ringeklassenobjekte umgesetzt werden können, die jeweils (1) von einem hierin anhand seiner Objektkennung vorgegebenen parametrischen Schlangenobjekt abhängig sind und (2) einen Punkt im Konstruktionsraum repräsentieren, der auf eine Lage auf einer parametrischen Linie im Konstruktionsraum beschränkt ist, die durch das genannte parametrische Schlangenobjekt repräsentiert wird und dadurch eine Mehrebenen-Abhängigkeitsbeziehung bildet.

27. Verfahren nach Anspruch 25, ferner dadurch gekennzeichnet, daß der Schritt des Definierens und Unterstützens einer Mehrzahl relationaler Entities das Definieren und Unterstützen einer Schlangensegement-Entity durch rechnerimplementierte Schritte umfaßt, die in ein oder mehrere Schlangensegmentobjekte umgesetzt werden kann, die jeweils ein parametrisches Schlangenobjekt anhand seiner Objektkennung und zwei Ringeklassenobjekte anhand ihrer Objektkennungen vorgeben, wobei jedes genannte Schlangensegmentobjekt einen Abschnitt einer Kurve repräsentiert, die durch das genannte parametrische Schlangenobjekt repräsentiert wird, wobei der genannte Abschnitt zwischen Punkten auf der genannten Kurve liegt, die durch die genannten beiden Ringeklassenobjekte repräsentiert wird.

28. Verfahren nach Anspruch 25, ferner dadurch gekennzeichnet, daß der Schritt des Definierens und Unterstützens einer Mehrzahl relationaler Entities das Definieren und Unterstützen einer Subflächen-Entity durch rechnerimplementierte Schritte umfaßt, die in ein oder mehrere Subflächenobjekte umgesetzt werden können, die jeweils ein parametrisches Flächenobjekt und vier Schlangenklassenobjekte anhand ihrer Objektkennungen vorgeben, wobei jedes genannte Subflächenobjekt einen Abschnitt einer parametrischen Fläche repräsentiert, die durch das genannte parametrische Flächenobjekt repräsentiert wird, wobei der genannte Abschnitt der genannten parametrischen Fläche durch vier Punkte auf der genannten parametrischen Fläche begrenzt wird, die durch die genannten Schlangenklassenobjekte repräsentiert werden.

**29.** Verfahren nach Anspruch 25, ferner dadurch gekennzeichnet, daß der Schritt des Definierens und Unterstützens einer Mehrzahl relationaler Entities das Definieren und Unterstützen einer relativen Ringe-Entity durch rechnerimplementierte Schritte umfaßt, die in ein oder mehrere relative Ringobjekte umgesetzt werden können, die jeweils (1) von einem anhand ihrer Objektkennung darin vorgegebenen Ringeklassenobjekt abhängig sind, und (2) einen Parameterwertversatz vorgibt, wobei jedes genannte relative Ringobjekt einen Punkt im Konstruktionsraum repräsentiert, der (a) auf einer parametrischen Kurve in dem genannten Konstruktionsraum liegt, die dem Schlangenobjekt entspricht, von dem das hierin vorgegebene Ringeklassenobjekt abhängig ist, und (b) sich an dem vorgegebenen Parameterwertversatz entlang dieser parametrischen Kurve von einem Punkt auf der genannten parametrischen Kurve befindet, der durch das genannte Ringeklassenobjekt repräsentiert wird, so daß eine Mehrebenen-Abhängigkeitsbeziehung entsteht, bei der das genannte Ringobjekt einen Punkt im Konstruktionsraum definiert, der auf eine Lage auf einer parametrischen Kurve beschränkt ist, die wiederum auf eine Lage auf einer parametrischen Fläche beschränkt ist.

**30.** Verfahren nach Anspruch 3, ferner dadurch gekennzeichnet, daß die Sammlung geometrischer Objekte zwei der geometrischen Flächenklassenobjekte beinhaltet, die von den genannten ein oder mehreren Flächenklassen-Entities umgesetzt werden, wobei jedes der genannten beiden geometrischen Flächenklassenobjekte von einem gemeinsamen Kurvenobjekt abhängig ist, das anhand seiner Objektkennung darin identifiziert wird, wobei das genannte gemeinsame Kurvenobjekt eine gemeinsame Kante im Konstruktionsraum definiert, die zwei Flächen gemeinsam ist, die durch die genannten beiden geometrischen Flächenklassenobjekte definiert werden, und dadurch, daß das genannte Verfahren ferner als Reaktion auf eine Änderung des genannten gemeinsamen Kurvenobjektes das automatische Aktualisieren des absoluten geometrischen Modells umfaßt, so daß die genannten geometrischen Flächenklassenobjekte entlang der genannten gemeinsamen Kante in neuen Formen und Orten verbunden bleiben.

**31.** Verfahren nach Anspruch 15, ferner dadurch gekennzeichnet, daß die durch rechnerimplementierte Schritte unterstützten geometrischen Entities wenigstens eine geregelte oder erhabene flächengeometrische Entity umfassen, die in bezug auf ihre Umsetzung von zwei oder mehr kurvengeometrischen Objekten abhängig ist, die anhand von Objektname oder -nummer vorgegeben werden, dadurch, daß zwei geregelte oder erhabene flächengeometrische Objekte, die von den genannten geregelten oder erhabenen flächengeometrischen Entities umgesetzt wurden, so gestaltet sind, daß sie eine gemeinsame Kante durch Abhängigkeit von kurvengeometrischen Objekten mit gemeinsamen Endpunkten haben, und dadurch, daß das genannte Verfahren die weiteren Schritte des Änderns eines oder mehrerer der genannten kurvengeometrischen Objekte umfaßt, und automatisches Aktualisieren des geometrischen Modells, so daß die genannten geregelten oder erhabenen flächengeometrischen Objekte entlang der genannten gemeinsamen Kante in neuen Formen und Orten verbunden bleiben.

**32.** Verfahren nach Anspruch 19, ferner dadurch gekennzeichnet, daß die durch rechnerimplementierte Schritte unterstützten geometrischen Entities wenigstens eine kantenangeglichene, geregelte oder erhabene Flächen-Entity beinhalten, die abhängig ist von anhand von Objektname oder -nummer vorgegebenen Kurvenobjekten, wobei wenigstens eines der genannten Kurvenobjekte wenigstens eine Kante eines Flächenobjektes bildet, das von der genannten kurvenangeglichenen, geregelten oder erhabenen Flächen-Entity umgesetzt wurde, und ein kurvenangeglichenes, geregeltes oder erhabenes Flächenobjekt, das von der genannten kantenangeglichenen, geregelten oder erhabenen Flächen-Entity umgesetzt wurde, ein Schlangenobjekt benutzt, das anhand von Objektname oder -nummer vorgegeben wurde und auf einem anderen Flächenobjekt als Kantenkurve liegt, und dadurch, daß das genannte Verfahren ferner die Schritte des Änderns des genannten anderen Flächenobjektes oder des genannten Schlangenobjektes und das automatische Aktualisieren des geometrischen Modells beinhaltet, so daß das genannte kurvenangeglichene, geregelte oder erhabene Flächenobjekt mit dem genannten anderen Flächenobjekt entlang des genannten schlangengeometrischen Objektes in neuen Formen und Positionen verbunden bleibt.

**33.** Verfahren nach Anspruch 1, dadurch gekennzeichnet, daß es ferner das Definieren und Unterstützen einer Punkteroutine durch rechnerimplementierte Schritte zum Bewerten von Punkteklassenobjekten umfaßt, wobei die genannte Punkteroutine so programmiert wird, daß sie sich selbst auf rekursive Weise aufruft.

**34.** Verfahren nach Anspruch 1, dadurch gekennzeichnet, daß es ferner das Definieren und Unterstützen einer Flächenroutine durch rechnerimplementierte Schritte zum Bewerten von Flächenklassenobjekten umfaßt, wobei die genannte Flächenroutine so programmiert ist, daß sie sich selbst auf rekursive Weise aufruft.

**35.** Verfahren nach Anspruch 1, ferner dadurch gekennzeichnet, daß die wenigstens eine der genannten relationalen Entities, die eine der genannten Flächenklassen-Entities ist, zwei oder mehr Referenzen auf Objektkennungen anderer Objekte ist, von denen wenigstens eines eine Objektkennung oder ein Kurvenklassenobjekt beinhaltet.

## Revendications

**1.** Un procédé d'étude automatisée de modèles géométriques construits à partir d'une multiplicité d'éléments géométriques tels que points, courbes et surfaces dans un espace d'étude de deux dimensions ou davantage, ledit procédé englobant :

définition et support d'un ensemble d'entités géométriques à utiliser pour la construction desdits modèles géométriques, chacune desdites entités géométriques étant un type d'objet géométrique abstrait qui est adapté pour être actualisé en un ou plusieurs objets géométriques correspondants stockés dans une mémoire accessible par ordinateur, chacune desdites entités géométriques exigeant, pour son actualisation en lesdits un ou plusieurs objets géométriques correspondants, une référence à un ou plusieurs éléments d'un type de données valide ;

lesdites entités géométriques englobant une ou plusieurs entités de la classe des points,

procédé dans lequel chacune desdites entités de la classe des points est adaptée pour être actualisée en un ou plusieurs objets de la classe des points, chacun desdits objets de la classe des points désignant un point à dimension zéro dans ledit espace d'étude ;

ledit procédé étant caractérisé en ce que lesdites entités géométriques englobent de plus une ou plusieurs entités de la classe des courbes,

chacune desdites entités de la classe des courbes étant adaptée pour être actualisée en un ou plusieurs objets de la classe des courbes, chacun desdits objets de la classe des courbes désignant un ensemble de points unidimensionnels continus définis dans ledit espace d'étude ;

en ce que lesdites entités géométriques englobent de plus une ou plusieurs entités de la classe des surfaces, chacune desdites entités de la classe des surfaces étant adaptée pour être actualisée en un ou plusieurs objets de la classe des surfaces, chacun desdits objets de la classe des surfaces désignant un ensemble de points continus bidimensionnels définis dans ledit espace d'étude ; et

en ce que ledit procédé englobe de plus :

identification d'au moins certains desdits objets géométriques par des identificateurs d'objet uniques correspondants ; et

définition et support d'une pluralité d'entités relationnelles parmi ledit ensemble d'entités géométriques, chacune desdites entités relationnelles étant adaptée pour être actualisée en un ou plus objets relationnels correspondants stockés dans une mémoire accessible d'ordinateur, chacune desdites entités relationnelles exigeant, pour son actualisation en chacun desdits un ou plusieurs objets relationnels correspondants, une référence aux identificateurs d'objet d'un ou plusieurs objets géométriques, chaque objet relationnel étant désigné par l'entité relationnelle à partir de laquelle il a été actualisé, établissant ainsi une relation de dépendance relativement à un ou plusieurs objets géométriques dont les identificateurs d'objet sont désignés par ledit objet relationnel ;

selon lequel une au moins desdites entités relationnelles est l'une desdites entités de la classe des courbes et exige, pour être actualisée en un objet de la classe des courbes, une référence aux identificateurs d'objet de deux objets de la classe des points ou davantage ; et

selon lequel l'une au moins desdites entités relationnelles est l'une desdites entités de la classe des surfaces et exige, pour être actualisée en un objet de la classe des surfaces, une référence aux identificateurs d'objet de deux objets géométriques sélectionnés parmi les objets de la classe des points et les objets de la classe des courbes.

**2.** Un procédé selon la Revendication 1, caractérisé en ce qu'il englobe de plus la définition, par des étapes mises en oeuvre par ordinateur, et le stockage dans la mémoire d'un ordinateur, d'un modèle géométrique logique composé d'une collection d'objets géométriques qui sont actualisés à partir desdits ensembles d'entités géométriques, selon lequel ladite collection d'objets géométriques englobe un ou plusieurs objets relationnels, chacun desdits objets relationnels étant un objet géométrique actualisé à partir d'une desdites entités relationnelles.

**3.** Un procédé selon la Revendication 2, caractérisé en ce qu'il englobe de plus la génération dans l'espace d'étude, à partir dudit modèle géométrique logique, par des étapes mises en oeuvre par ordinateur, d'un modèle géométrique absolu en termes de coordonnées de géométrie analytique absolue.

**4.** Un procédé selon la Revendication 2, caractérisé de plus en ce que ladite collection d'objets géométriques englobe une structure de données graphiques dirigée qui identifie des dépendances parmi ladite collection d'objets géométriques.

**5.** Un procédé selon la Revendication 4, caractérisé de plus en ce que la structure de données graphiques dirigée est acyclique.

**6.** Un procédé selon la Revendication 4, caractérisé en ce qu'il englobe de plus, en réponse à un changement d'un objet géométrique particulier qui fait partie de la structure de données graphiques dirigée, une mise à jour automatique d'autres objets géométriques dudit modèle géométrique en un ordre qui est déterminé par ladite structure de données graphiques dirigée.

**7.** Un procédé selon la Revendication 1, caractérisé de plus en ce l'étape de définition et de support d'une pluralité d'entités géométriques englobe la définition et le support, par des étapes mises en oeuvre par ordinateur, d'une entité point absolue qui peut être actualisée en un ou plusieurs objets points absolus, dont chacun possède des valeurs de coordonnées absolues spécifiées d'un point correspondant dans ledit espace d'étude, et en ce que l'étape de définition et de support d'une pluralité d'identités relationnelles englobe la définition et le support, par des étapes mises en oeuvre par ordinateur, d'une classe d'entités courbes paramétriques, dont chacune peut être actualisée en un ou plusieurs objets courbes paramétriques, dont chacune dépend d'un ensemble ordonné d'objets de la classe des points spécifiés dedans par des identificateurs d'objet.

**8.** Un procédé selon la Revendication 7, caractérisé de plus en ce que l'étape de définition et de support de la pluralité d'identités relationnelles englobe la définition et le support, par des étapes mises en oeuvre par ordinateur, d'une entité point relative qui peut être actualisée en un ou plusieurs objets géométriques ponctuels relatifs, dont chacun (1) dépend d'un autre objet de la classe des points spécifié dedans par un identificateur d'objet et (2) a des décalages de valeurs de coordonnées spécifiées à partir d'un point, dans l'espace d'étude, qui correspond à l'objet de la classe des points spécifié sur lequel il dépend.

**9.** Un procédé selon la Revendication 7, caractérisé de plus en ce que l'étape de définition et de support de ladite pluralité d'entités relationnelles englobe la définition et le support, par des étapes mises en oeuvre par ordinateur, d'une entité ligne qui peut être actualisée en un ou plusieurs objets géométriques linéaires, dont chacun dépend de deux objets de la classe des points qui sont spécifiés dedans par des identificateurs d'objet.

**10.** Un procédé selon la Revendication 7, caractérisé de plus en ce que l'étape de définition et de support de la dite pluralité d'identités relationnelles englobe la définition et le support, par des étapes mises en oeuvre par ordinateur, d'une entité courbe paramétrique à spline B qui peut être actualisée en un plusieurs objets courbes paramétriques à spline B, dont chacun dépend de deux objets de la classe des points ou davantage spécifiés dedans par des identificateurs d'objet.

**11.** Un procédé selon la Revendication 7, caractérisé de plus en ce que l'étape de définition et de support de ladite pluralité d'entités relationnelles englobe la définition et le support, par des étapes mises en oeuvre par ordinateur, d'une entité courbe à splines paramétriques interpolatifs, qui peut être actualisée en un ou plusieurs objets courbes à splines paramétriques interpolatifs, dont chacun dépend de deux objets de la classe des points ou davantage, lesquels sont spécifiés dedans par des identificateurs d'objet.

**12.** Un procédé selon la Revendication 7, caractérisé de plus en ce que l'étape de définition et de support de ladite pluralité d'entités relationnelles englobe la définition et le support, par des étapes mises en oeuvre par ordinateur, d'une ou de plusieurs entités de la classe des sphères, qui peuvent être actualisées en un ou plusieurs objets de la classe des sphères, chacun desdits objets de la classe des sphères représentant un point en une position spécifiée sur un objet courbe paramétrique, lesdites une ou plusieurs entités de la classe des sphères englobant une entité sphère absolue qui peut être actualisée en un ou plusieurs objets sphères absolues, dont chacun spécifie (1) un objet courbe paramétrique par son identificateur d'objet et (2) une valeur paramétrique, chacun desdits objets de la classe des sphères absolues représentant un point dans l'espace d'étude qui est situé à ladite valeur paramétrique spécifiée le long d'une courbe paramétrique dans ledit espace d'étude qui correspond à l'objet courbe paramétrique spécifié dedans.

**13.** Un procédé selon la Revendication 7, caractérisé de plus en ce que l'étape de définition et de support de ladite pluralité d'entités relationnelles englobe la définition et le support, par des étapes mises en oeuvre par ordinateur, d'une entité de la classe des sphères, qui peut être actualisée en un ou plusieurs objets sphères absolues, dont chacun spécifie (1) un objet courbe paramétrique par son identificateur d'objet et (2) une valeur paramétrique, chacun desdits objets de la classe des sphères absolues représentant un point dans l'espace d'étude qui est situé à ladite valeur paramétrique spécifiée le long d'une courbe paramétrique dans ledit espace d'étude qui correspond à l'objet courbe paramétrique spécifié dedans.

14. Un procédé selon la Revendication 12, caractérisé de plus en ce que l'étape de définition et de support de ladite pluralité d'entités relationnelles englobe la définition et le support, par des étapes mises en oeuvre par ordinateur, d'une entité sous-courbe qui peut être actualisée en un ou plusieurs objets sous-courbes, dont chacun spécifie un objet courbe paramétrique par son identificateur d'objet et deux objets de la classe des sphères par leurs identificateurs d'objet, chacun desdits objets sous-courbes représente une partie d'une courbe qui est représentée par ledit objet de la classe des courbes, ladite partie étant comprise entre des points, sur ladite courbe, représentés par lesdits deux objets de la classe des sphères.

15. Un procédé selon la Revendication 12, caractérisé de plus en ce que l'étape de définition et de support de ladite pluralité d'entités relationnelles englobe la définition et le support, par des étapes mises en oeuvre par ordinateur, une entité sphère relative, qui peut être actualisée en un ou plusieurs objets sphères relatifs, dont chacun (1) dépend d'un objet de la classe des sphères spécifié dedans par son identificateur d'objet et (2) spécifie un décalage de valeur paramétrique, chacun objet sphère relatif représentant un point, dans l'espace d'étude, qui (a) se trouve sur une courbe paramétrique dans l'espace d'étude qui correspond à l'objet de la classe des sphères spécifié dedans et (b) est placé au décalage de valeur paramétrique spécifié le long de cette courbe paramétrique depuis un point, sur ladite courbe paramétrique, qui est représenté par ledit objet de la classe des sphères, créant ainsi une relation de dépendance multiniveau.

16. Un procédé selon la Revendication 7, caractérisé de plus en ce que l'étape de définition et de support d'une pluralité d'entités relationnelles englobe la définition et le support, par des étapes mises en oeuvre par ordinateur, d'une classe d'entités surfaces paramétriques, dont chacune peut être actualisée en un ou plusieurs objets surfaces paramétriques, dont chacun dépend d'un ensemble ordonné d'objets spécifiés dedans par des identificateurs d'objet, ledit objet ou lesdits objets surfaces paramétriques représentant une surface définie, dans l'espace d'étude, par des formes géométriques qui, dans l'espace d'étude, correspondent à l'ensemble ordonné d'objets spécifiés dedans, établissant ainsi une relation à dépendances multiples de ladite surface avec lesdites formes géométriques.

17. Un procédé selon la Revendication 16, caractérisé de plus en ce que ledit ensemble ordonné d'objets est un ensemble ordonné d'objets de la classe des points.

18. Un procédé selon la revendication 16, caractérisé de plus en ce que ledit ensemble ordonné d'objets est un ensemble ordonné d'objets de la classe des courbes.

19. Un procédé selon la Revendication 15, caractérisé de plus en ce que l'étape de définition et de support d'une pluralité d'entités relationnelles englobe la définition et le support, par des étapes mises en oeuvre par ordinateur, d'une ou plusieurs entités de la classe des aimants qui peuvent être actualisées en un ou plusieurs objets de la classe des aimants, chacun des objet de la classe des aimants représentant un point en une position spécifiée sur un objet surface paramétrique, ladite ou lesdites entités de la classe des aimants englobant une entité aimant absolue, qui peut être actualisée en un ou plusieurs objets aimants absolus, dont chacun (1) dépend d'un objet surface paramétrique spécifié dedans par son identificateur d'objet et (2) spécifie des valeurs paramétriques, chacun desdits objets aimants absolus représentant un point, dans l'espace d'étude, situé auxdites valeurs paramétriques spécifiées sur une surface paramétrique qui, dans ledit espace d'étude, correspond à l'objet surface paramétrique spécifié dedans, définissant ainsi un point qui, dans l'espace d'étude, se trouve forcément sur une surface paramétrique en une relation de dépendance.

20. Un procédé selon la Revendication 19, caractérisé de plus en ce que l'étape de définition et de support d'une pluralité d'entités relationnelles englobe la définition et le support, par des étapes mises en oeuvre par ordinateur, d'une entité aimant relative, qui peut être actualisée en un ou plusieurs objets aimants relatifs, dont chacun (1) dépend d'un objet de la classe des aimants spécifié dedans par son identificateur d'objet et (2) spécifie [a] des décalages de valeurs paramétriques, chacun desdits objets aimants relatifs représentant un point, dans l'espace d'étude, qui (a) se trouve sur une surface paramétrique dans l'espace d'étude qui correspond à l'objet de la classe des aimants spécifié dedans et (b) est situé aux décalages de valeurs paramétriques spécifiés sur cette surface paramétrique depuis un point qui, sur ladite surface paramétrique, est représenté par l'objet de la classe des aimants spécifié dedans, définissant ainsi un point qui, dans l'espace d'étude, se trouve forcément sur une surface paramétrique en une relation de dépendance multiniveau.

21. Un procédé selon la Revendication 16, caractérisé de plus en ce que l'étape de définition et de support d'une pluralité d'entités relationnelles englobe la définition et le support, par des étapes mises en oeuvre par ordinateur, d'une entité aimant relative, qui peut être actualisée en un ou plusieurs objets aimants relatifs, dont chacun (1) dépend d'un objet de la classe des aimants spécifié dedans par son identificateur d'objet et (2) spécifie un décalage des valeurs paramétriques, chacun desdits objets aimants relatifs représentant un point, dans l'espace d'étude, qui (a) se trouve sur une surface paramétrique qui, dans l'espace d'étude, correspond à l'objet de la classe des aimants spécifié dedans et (b) est situé aux décalages spécifiés de valeurs paramétriques le long de cette surface paramétrique depuis un point qui, sur ladite surface paramétrique, est représenté par l'objet de la classe des aimants spécifié dedans, définissant ainsi un point qui, dans l'espace d'étude, se trouve forcément sur une surface paramétrique en une relation de dépendance multiniveau.

22. Un procédé selon la Revendication 19, caractérisé de plus en ce que l'une ou plusieurs des entités de la classe des surfaces englobe(nt) une entité surface réglée et selon lequel l'un ou chacun desdits objets de la classe des surfaces actualisés depuis ladite entité surface réglée est un objet surface réglée qui dépend d'un ensemble ordonné de deux objets courbes, chacun desdits objets surfaces réglées représentant, dans l'espace d'étude, une surface ayant deux bords délimités par des courbes courbes qui correspondent à l'ensemble ordonné de deux objets courbes spécifiés dedans.

23. Un procédé selon la Revendication 15, caractérisé de plus en ce que l'une ou plusieurs des entités de la classe des surfaces englobe une entité surface à bords fondus et selon lequel ledit objet ou chacun desdits objets de la classe des surfaces actualisé à partir de ladite entité surface à bords fondus est un objet surface à bords fondus qui dépend d'un ensemble ordonné de quatre objets courbes, chacun desdits objets surface à bords fondus représentant, dans l'espace d'étude, un élément 《Coons patch》 bilinéaire ayant quatre bords définis, dans l'espace d'étude, par des courbes qui correspondent à l'ensemble ordonné de quatre objets courbes spécifiés dedans.

24. Un procédé selon la Revendication 15, caractérisé de plus en ce que l'une ou plusieurs des entités de la classe des surfaces englobe une entité surface-surélevée et selon lequel ledit objet ou chacun desdits objets de la classe des surfaces actualisés à partir de ladite entité surface surélevée est un objet surface surélevée qui dépend d'un ensemble ordonné de trois objets courbes ou davantage, chacun desdits objets surfaces surélevées représentant, dans l'espace d'étude, une surface composée d'une infinité de courbes qui, dans l'espace d'étude, sont interpolées à travers des courbes qui correspondent à l'ensemble ordonné de trois objets courbes ou davantage spécifiés dedans.

25. Un procédé selon la Revendication 19, caractérisé de plus en ce que l'étape de définition et de support d'une pluralité d'entités relationnelles englobe la définition et le support, par des étapes mises en oeuvre par ordinateur, d'une entité lacet paramétrique qui peut être actualisée en un ou plusieurs objets lacets paramétraux, dont chacun

(1) dépend de deux objets aimants ou davantage spécifiés dedans par leurs identificateurs d'objet, et dont chacun dépend d'un objet surface paramétrique commun et
(2) représente une ligne qui, dans l'espace d'étude, se trouve forcément sur une surface paramétrique qui, dans l'espace d'étude, est représentée par ledit objet surface paramétrique commun, formant ainsi une relation de dépendance multiniveau.

26. Un procédé selon la Revendication 24, caractérisé de plus en ce que l'étape de définition et de support d'une pluralité d'entités relationnelles englobe la définition et le support, par des étapes mises en oeuvre par ordinateur, une entité de la classe des anneaux, qui peut être actualisée en un ou plusieurs objets de la classe des anneaux, dont chacun (1) dépend d'un objet lacet paramétrique spécifié dedans par son identificateur d'objet et (2) représente un point qui, dans l'espace d'étude, se trouve forcément sur une ligne paramétrique qui, dans l'espace d'étude, est représentée par ledit objet lacet paramétrique, formant ainsi une relation de dépendance multiniveau.

27. Un procédé selon la Revendication 25, caractérisé de plus en ce que l'étape de définition et de support d'une pluralité d'entités relationnelles englobe la définition et le support, par des étapes mises en oeuvre par ordinateur, une entité sous-lacet qui peut être actualisée en un ou plusieurs objets sous-lacets dont chacun spécifie dedans un objet lacet paramétrique par son identificateur d'objet et deux objets de la classe annulaire par leurs identificateurs d'objet, chaque objet sous-lacet représentant une partie d'une courbe qui est représentée par ledit objet lacet paramétrique, ladite partie se trouvant entre des points, sur ladite courbe, représentés par lesdits deux objets de la classe des anneaux.

**28.** Un procédé selon la Revendication 25, caractérisé de plus en ce que l'étape de définition et de support d'une pluralité d'entités relationnelles englobe la définition et le support, par des étapes mises en oeuvre par ordinateur, une entité sub-surface qui peut être actualisée en un ou plusieurs objets sub-surfaces, dont chacun spécifie dedans un objet surface paramétrique et quatre objets de la classe des lacets par leurs identificateurs d'objet, chacun desdits objets sub-surfaces représentant une partie d'une surface paramétrique qui est représentée par ledit objet surface paramétrique, ladite partie de ladite surface paramétrique étant limitée par quatre points qui, sur ladite surface paramétrique, sont représentés par lesdits objets de la classe des lacets.

**29.** Un procédé selon la Revendication 25, caractérisé de plus en ce que l'étape de définition et de support d'une pluralité d'entités relationnelles englobe la définition et le support, par des étapes mises en oeuvre par ordinateur, d'une entité anneau relative, qui peut être actualisée en un ou plusieurs objets anneaux relatifs, dont chacun (1) dépend d'un objet de la classe des anneaux spécifié dedans par son identificateur d'objet, et (2) spécifie un décalage d'une valeur paramétrique, chaque objet anneau relatif représentant, dans l'espace d'étude, un point qui (a) se trouve sur une courbe paramétrique, dans ledit espace d'étude, qui correspond à l'objet lacet sur lequel dépend l'objet de la classe des anneaux spécifié dedans, et (b) se trouve au décalage de valeur paramétrique spécifié le long de cette courbe paramétrique depuis un point, sur ladite courbe paramétrique, qui est représenté par ledit objet de la classe des anneaux, établissant ainsi une relation de dépendance multiniveau dans laquelle ledit objet anneau définit, dans l'espace d'étude, un point qui se trouve forcément sur une courbe paramétrique qui, à son tour, se trouve forcément sur une surface paramétrique.

**30.** Un procédé selon la Revendication 3, caractérisé de plus en ce que la collection d'objets géométriques englobe deux des objets géométriques de la classe des surfaces actualisés à partir de ladite ou de l'une desdites entités de la classe des surfaces, chacun des deux objets géométriques de ladite classe des surfaces dépendant d'un objet courbe commun qui est identifié dedans par son identificateur d'objet, ledit objet courbe commun définissant, dans l'espace d'étude, un bord commun partagé par deux surfaces délimitées par lesdits deux objets géométriques de la classe des surfaces, et en ce que ledit procédé englobe de plus, en réponse à un changement dans ledit objet courbe commun, une mise à jour automatique du modèle géométrique absolu de façon telle que les objets géométriques de la classe des surfaces demeurent joints le long dudit bord commun en de nouvelles formes et en de nouveaux emplacements.

**31.** Un procédé selon la Revendication 15, caractérisé de plus en ce que les entités géométriques supportées par des étapes mises en oeuvre par ordinateur, englobent au moins une entité géométrique surface réglée ou surélevée qui, pour son actualisation, dépend de deux objets géométriques courbes ou davantage spécifiés par nom ou numéro d'objet, en ce que deux objets géométriques surfaces réglées ou surélevées, actualisés à partir desdites entités géométriques surfaces réglées ou surélevées, ont obligatoirement un bord commun du fait de leur dépendance relativement à des objets géométriques courbes ayant des points terminaux communs et en ce que ledit procédé englobe les autres étapes de modification d'un ou davantage desdits objets géométriques courbes, et une mise à jour automatique du modèle géométrique de façon telle que les objets géométriques de surfaces réglées ou surélevées demeurent joints le long dudit bord commun en de nouvelles formes et en de nouveaux emplacements.

**32.** Un procédé selon la Revendication 19, caractérisé de plus en ce que les entités géométriques supportées par des étapes mises en oeuvre par ordinateur, englobent au moins une entité surface réglée ou surélevée à bords fondus dépendant d'objets courbes spécifiés par nom ou numéro d'objet, au moins l'un desdits objets courbes formant au moins un bord d'un objet surface actualisé à partir de ladite entité surface réglée ou surélevée à bords fondus et d'un objet surface réglée ou surélevée à bords fondus actualisé à partir de ladite entité surface réglée ou surélevée à bords fondus utilise un objet lacet spécifié par nom ou numéro d'objet, qui se trouve sur un quelconque autre objet surface, tel qu'une courbe de bord, et en ce que ledit procédé englobe les autres étapes de changement dudit autre objet surface ou dudit objet lacet et met automatiquement à jour le modèle géométrique de façon telle que ledit objet surface réglée ou surélevée et à bords fondus demeure joint audit autre objet surface le long dudit objet géométrique lacet en de nouvelles formes et de nouvelles positions.

**33.** Un procédé selon la Revendication 1, caractérisé en ce qu'il englobe de plus la définition et le support, par des étapes mises en oeuvre par ordinateur, d'un programme de points pour l'évaluation des objets de la classe des points, ledit programme de points étant programmé pour s'appeler lui-même d'une manière récurrente.

34. Un procédé selon la Revendication 1, caractérisé en ce qu'il englobe de plus la définition et le support, par des étapes mises en oeuvre par ordinateur, d'un programme de surfaces pour l'évaluation des objets de la classe des surfaces, ledit programme de surfaces étant programmé pour s'appeler lui-même d'une manière récurrente.

35. Un procédé selon la Revendication 1, caractérisé de plus en ce que au moins l'une desdites deux entités relationnelles qui est l'une desdites entités de la classe des surfaces a deux références ou davantage à des identificateurs d'objet d'autres objets dont au moins un englobe un identificateur d'objet ou un objet de la classe des courbes.

FIG. 1 Computer system

FIG. 2 Absolute and Relative Points

FIG. 3 Absolute and Relative Beads

FIG. 4 Absolute and Relative Magnets

FIG. 5 Absolute and Relative Rings

# FIG. 6    Arc and Line Curves

# FIG. 7    B-spline Curve

# FIG. 8    C-spline curve

# FIG. 9    Sub-curve

# FIG. 10    Relative Curve

FIG. 11 Ruled Surface

FIG. 12 Translation Surface

FIG. 13 Revolution Surface

FIG. 14 Blended Surface

FIG. 15   C-lofted Surface

FIG. 16   B-spline Surface

FIG. 17   Sub-surface

FIG. 18   Relative Surface

# FIG. 19 Line Snake

# FIG. 20 Arc Snake

# FIG. 21 B-spline Snake

# FIG. 22 C-spline Snake

FIG. 23    Sub-snake

FIG. 24    Relative Snake

FIG. 25    Example digraph

# FIG. 26   Organization of Program Modules

FIG. 27 Example Application